# EUROPEAN PATENT SPECIFICATION

(11) **EP 4 140 804 B1**
(45) Date of publication and mention of the grant of the patent: **21.05.2025**
(21) Application number: 22191350.2
(22) Date of filing: 19.08.2022
(51) Int. Cl.: B60L 53/67, B60L 53/31, B60L 53/63

(54) **CHARGING PILE, CHARGING SYSTEM, AND CHARGING METHOD**
LADESÄULE, LADESYSTEM UND LADEVERFAHREN
PILE DE CHARGE, SYSTÈME DE CHARGE ET PROCÉDÉ DE CHARGE

(30) Priority: 24.08.2021 CN 202110977734
(43) Date of publication of application: 01.03.2023
(73) Proprietor: Huawei Digital Power Technologies Co., Ltd., Shenzhen, 518043 (CN)
(72) Inventor: WANG, Yichang, Shenzhen, Guangdong, 518129 (CN); LIU, Baoquan, Shenzhen, Guangdong, 518129 (CN); REN, Zhanlin, Shenzhen, Guangdong, 518129 (CN); HAN, Xinru, Shenzhen, Guangdong, 518129 (CN)
(74) Representative: MERH-IP Matias Erny Reichl Hoffmann Patentanwälte PartG mbB

(56) References cited:
- EP-A1- 3 726 691
- WO-A1-2021/000669
- US-A1- 2013 187 602
- US-A1- 2019 241 089
- US-A1- 2021 237 610

## Description

### TECHNICAL FIELD

This application relates to the field of new energy vehicles, and more specifically, to a charging pile, a charging system, and a charging method.

### BACKGROUND

With vigorous development of the new energy vehicle industry, production and sales of new energy vehicles are increasing. Most new energy vehicles are battery electric vehicles (battery electric vehicles, BEVs) and plug-in hybrid electric vehicles (plug-in hybrid electric vehicles, PHEVs). Energy of an installed battery pack usually ranges from 40 kWh to 100 kWh. A power of a common AC slow charging mode in the market is 3 kW to 11 kW, which is far from meeting a fast charging requirement of a vehicle owner. Therefore, a charging pile or a charging cabinet is required to provide high-power DC charging.

Regardless of a high-voltage charging loop or a charging control system of a previously constructed DC integrated charging pile, charging piles are basically independent of each other. Consequently, power sharing between the charging piles cannot be implemented, resulting in a high power ratio of the charging pile and idle power in non-charging time. Currently, a charging pile that can provide flexible power allocation implements interconnection and power sharing in a "node-based" serial sharing manner. However, this type of charging pile can share power only with an adjacent pile, and power sharing is not flexible enough.
US 2019/241089 A1 discloses a charging system including a charging station, at least one first charging column, which has one or more charging plugs, a buffer store for storing energy, a mains connection for providing energy to the charging station and a switching apparatus, which is configured to conduct the flow of energy from the buffer store and/or from the mains connection to the first charging column. The system can also have a second charging column, which has one or more charging plugs. The switching apparatus is provided in such a way that it distributes the flow of energy from the buffer store and/or the mains connection over the two charging columns or conducts the flow of energy to one of the two charging columns.
US 2013/187602 A1 discloses a network of chargers for a battery of an electric vehicle, having a 1st power connection, a power converter, a 2nd power connection and at least a 3rd power connection for exchanging power with another charger. A controller is provided for controlling a power switch, and is configured to: connect the power converter to the 2nd power connection when a vehicle is to be charged from the power source, connect the power converter to the at least one 3rd power connection when power is to be delivered to another charger, and connect the at least one 3rd power connection to the 2nd power connection when power from another charger is to be delivered to the vehicle. EP 3 726 691 A1 discloses a mobile charging device, comprising: a charging control unit connected to a power distribution unit and one or more power units and configured to control the power distribution unit and the one or more power units; the one or more power units connected to the power distribution unit and configured to transmit electric energy to the power distribution unit; and the power distribution unit configured to distribute and output the electric energy according to required charging powers of vehicles to be charged.
US 2021/237610 A1 discloses an electric-vehicle charging station, wherein the charging station includes at least one charger. Each charger includes at least one power conversion unit and at least one charging terminal. Each power conversion unit includes an alternating-current power distribution module, a plurality of rectification modules, a switch matrix and a power controller.

### SUMMARY

This application provides a charging pile, a charging system, and a charging method, to implement flexible power sharing of a charging pile by controlling turn-on and turn-off of switches at different locations in the charging pile. The technical improvement is achieved by the solution provided in accordance with the claims.

According to a first aspect, this application provides a charging pile according to claim 1.

Based on the foregoing design, a plurality of switches are disposed in the charging pile. These switches may be disposed at different locations in the charging pile to implement different functions. For example, different charging branches in the charging pile may be connected, or a current charging pile may be connected to another charging pile. The switches with different functions are controlled to be turned on or turned off, so that different charging loops may be formed inside the charging pile and between the charging piles. Therefore, when a charging gun in a charging branch in the charging pile receives a charging request of a vehicle, but remaining power of the charging branch is less than required power of the vehicle, the switches at different locations in the charging pile are controlled to be turned on or turned off, to implement flexible power sharing inside the charging pile or between the charging piles, so as to meet a charging requirement of the vehicle.

With reference to the first aspect, in some possible designs, N ≥ 2, every two of the N charging branches are connected to each other by using an inter-branch switch. The inter-branch switch is controlled by one of the K charging controllers.

Based on the foregoing design, the charging pile includes at least two charging branches. When power of the power module connected to the charging gun is less than the required power of the vehicle, but a power module in another charging branch in the charging pile is in an idle state, power sharing between the charging branches in the charging pile may be preferentially considered. A circuit between the charging branch and another charging branch may be turned on by controlling turn-on of an inter-branch switch between related charging branches, so that both the power module in the another charging branch and the power module in the charging branch can supply power for the charging gun, to implement power sharing between different branches in the charging pile. This can implement flexible power sharing between different charging branches of each charging pile in the charging system.

With reference to the first aspect, in some possible designs, N = M.

In other words, a quantity of charging branches is the same as a quantity of interfaces. Each charging branch may be connected to one interface, to be connected to another external charging pile through the interface.

Optionally, N = M = 2.

In other words, the charging pile may include two charging branches and two interfaces. The two charging branches are in a one-to-one correspondence with the two interfaces. Each charging branch may be connected to another charging pile through a corresponding interface.

When remaining power of the charging pile is less than the required power of the vehicle, the charging branch in the charging pile may be connected to another charging pile through the interface, so that the charging branch can share power with the another charging pile.

According to a second aspect, this application provides a charging system. The charging system includes the charging piles in any one of the first aspect or the possible designs of the first aspect. Each charging pile is connected to one or more charging piles in the charging system through an interface.

Based on the foregoing design, in the charging system, each charging pile is circuit-connected through an interface. Therefore, when power of any charging pile is less than required power of a vehicle, the charging pile may use power from a charging pile other than the charging pile in the charging system. For example, the charging pile may send a power sharing request to the charging pile other than the charging pile. After a controller controls a switch to be turned on to connect a circuit between the two charging piles, the two charging piles can share power to charge the vehicle together, and this implements flexible power sharing in the charging system.

With reference to the second aspect, in some possible designs, a first charging gun in a first charging pile in the charging system is configured to receive a charging request. The charging request includes required power for charging. The first charging gun is further configured to forward the charging request to a first charging controller connected to the first charging gun. The first charging controller is configured to determine, based on the received charging request, whether remaining power of the first charging pile reaches the required power. The first charging controller is further configured to: when the remaining power of the first charging pile is less than the required power, determine, based on the remaining power of the first charging pile and the required power, shared power required by the first charging pile. The shared power is power that needs to be shared by one or more charging piles other than the first charging pile with the first charging pile.

That the remaining power of the first charging pile reaches the required power may specifically mean that the remaining power of the first charging pile is greater than or equal to the required power. That the remaining power of the first charging pile does not reach the required power may specifically mean that the remaining power of the first charging pile is less than the required power. The shared power may be a difference between the remaining power of the first charging pile and the required power of the vehicle.

Based on the foregoing design, after the charging gun of any charging pile in the system receives the charging request of the vehicle, that is, after the first charging gun of the first charging pile receives the charging request of the vehicle, the first charging controller connected to the first charging gun may determine, based on the required power in the charging request, whether the remaining power of the charging pile is greater than the required power and whether the shared power is required, and the first charging controller may determine the shared power.

With reference to the second aspect, in some possible designs, the first charging controller is further configured to determine a target charging pile from the one or more charging piles based on the shared power. The target charging pile is a charging pile whose remaining power is greater than or equal to the shared power in the one or more charging piles.

Based on the foregoing design, the first charging controller may determine, from the charging piles other than the first charging pile based on the determined shared power, one of the charging piles whose remaining power is greater than the shared power as the target charging pile, and share the power with the target charging pile.

With reference to the second aspect, in some possible designs, the first charging controller is further configured to send a power sharing request to a second charging controller. The power sharing request includes the shared power. The power sharing request is used to request to obtain the shared power from the target charging pile. The second charging controller is a charging controller of the target charging pile.

Based on the foregoing design, after determining the target charging pile, the first charging controller may send the power sharing request to the charging controller of the target charging pile. The power sharing request is used to request power sharing between the target charging pile and the first charging pile. The target charging pile may respond to the power sharing request, and turn on the switch to connect the circuit, so as to perform power sharing with the first charging pile.

With reference to the second aspect, in some possible designs, the charging system further includes a power adjustment controller. The power adjustment controller is connected to each charging controller of each charging pile in the charging system. The first charging controller is further configured to send a power sharing request to the power adjustment controller. The power sharing request includes the shared power. The power sharing request is used to request the power adjustment controller to determine, from the one or more charging piles other than the first charging pile, a target charging pile whose remaining power is greater than or equal to the shared power. The power adjustment controller is configured to determine the target charging pile from the one or more charging piles based on the power sharing request. The power adjustment controller is further configured to send the power sharing request to a second charging controller. The second charging controller is a charging controller of the target charging pile.

Based on the foregoing design, the charging system may include the power adjustment controller. The power adjustment controller may be connected to each charging controller of each charging pile in the charging system through a communication bus. The power adjustment controller may communicate with each charging controller of each charging pile, and may indirectly control turn-off or turn-on of each switch of each charging pile by using the charging controller of each charging pile, to control flexible power sharing in the charging system.

With reference to the second aspect, in some possible designs, the second charging controller is a charging controller in a charging branch with a largest number or a charging controller in a charging branch with a smallest number in a plurality of charging branches that can provide the shared power in the target charging pile.

Based on the foregoing design, when the remaining power of the plurality of branches in the target charging pile is greater than the shared power, the target charging pile may share the power with the first charging pile by using a power module or a power module group in the charging branch with the largest number in these branches, or the target charging pile may share the power with the first charging pile by using a power module or a power module group in the charging branch with the smallest number in these branches.

With reference to the second aspect, the target charging pile is one charging pile that is closest to the first charging pile and that is one of one or more charging piles whose remaining power is greater than or equal to the shared power.

Based on the foregoing design, the target charging pile is one charging pile that is closest to the first charging pile and that is one of one or more charging piles whose remaining power is greater than or equal to the shared power. There is a specific power loss on a wire. Therefore, when a distance is relatively long, there is a relatively large power loss on the wire. A shorter distance between the target charging pile and the first charging pile indicates a smaller power loss. In addition, a shorter distance between the target charging pile and the first charging pile indicates fewer switches that need to be turned on and faster circuit connection. For example, when the remaining power of an adjacent pile of the first charging pile is greater than the shared power, the target charging pile is the adjacent charging pile of the first charging pile. In this case, there is no charging pile between the first charging pile and the target charging pile. Therefore, only the switches of the first charging pile and the target charging pile need to be turned on. When the remaining power of an adjacent pile of the first charging pile is less than the shared power, and only cross-pile sharing can be performed, a charging pile closest to the first charging pile is also selected for cross-pile sharing. In this way, a quantity of charging piles between the first charging pile and the target charging pile can be minimized, and a quantity of switches that need to be turned on is relatively small.

According to a third aspect, this application provides a charging method according to claim 8.

The method may be performed by a controller in the charging system.

For example, when the charging system includes a controller connected to a controller of each charging pile, for example, a power adjustment controller, the method may be performed by the power adjustment controller. When the charging system does not include a controller connected to a controller of each charging pile, the method may be performed by the controller (for example, a charging controller) of each charging pile. This is not limited in this application.

Based on the foregoing solution, when the remaining power of the first charging pile is less than the required power of a vehicle, the controller may request, based on the charging request of the vehicle, another charging pile to share the power. The controller may determine, based on the shared power, the remaining power of the another charging pile, and a distance from the first charging pile, the target charging pile that can share the power, and send the power sharing request to the target charging pile, to implement power sharing between the target pile and the charging pile that receives the charging request of the vehicle. This can implement intra-pile sharing, adjacent pile sharing, and cross-pile sharing, and can implement flexible power sharing in the charging system.

With reference to the third aspect, the determining, based on shared power required by the first charging pile, a target charging pile from the one or more charging piles other than the first charging pile in the charging system includes: sequentially querying remaining power of each of the one or more charging piles other than the first charging pile in the charging system; and determining the target charging pile based on the shared power and a distance between each of the one or more charging piles and the first charging pile. The target charging pile is one charging pile that is closest to the first charging pile and that is one of one or more charging piles whose remaining power is greater than or equal to the shared power.

Based on the foregoing solution, the controller may obtain the remaining power of the one or more charging piles other than the first charging pile in the charging system, and may first exclude, based on the obtained remaining power, a charging pile whose remaining power is less than the shared power, and then determine the target charging pile from these charging piles based on distances from the first charging pile.

With reference to the third aspect, in some possible implementations, the determining, based on shared power required by the first charging pile, a target charging pile from the one or more charging piles other than the first charging pile in the charging system includes: determining, based on the shared power, the target charging pile from the one or more charging piles in ascending order of distances from the first charging pile. The target charging pile is one charging pile that is closest to the first charging pile and that is one of one or more charging piles whose remaining power is greater than or equal to the shared power.

Based on the foregoing solution, the controller may sequentially obtain the remaining power of the charging piles in ascending order of the distances from the first charging pile. When the obtained remaining power of the charging pile is greater than the shared power, the controller may determine the charging pile as the target charging pile, and does not need to obtain the remaining power of each charging pile other than the first charging pile in the charging system.

With reference to the third aspect, in some possible implementations, the method is performed by a first charging controller in the first charging pile. The first charging controller is a charging controller configured to control a first charging gun in the first charging pile. The first charging gun is a charging gun that is in the first charging pile and that receives the charging request. The charging request includes required power for charging.

With reference to the third aspect, in some possible implementations, the method is performed by a power adjustment controller. The power adjustment controller is connected to each charging controller of each charging pile in the charging system. The method further includes: receiving a power sharing request from a first charging controller. The power sharing request includes the shared power. The first charging controller is a charging controller configured to control a first charging gun in the first charging pile. The first charging gun is a charging gun that is in the first charging pile and that receives the charging request. The charging request includes required power for charging. The shared power is determined based on the required power and the remaining power of the first charging pile.

With reference to the third aspect, in some possible implementations, the first charging pile includes a first interface, a second interface, and a first switch located between the first interface and the second interface. The first switch is an interface switch. The first charging pile is connected to the target charging pile through the first interface. The first charging gun is connected to the second interface. The method further includes: controlling the first switch to be turned on.

With reference to the third aspect, in some possible implementations, the first charging pile includes a first interface, a second interface, and a first switch located between the first interface and the second interface. The first switch is an interface switch. The first charging pile is connected to the target charging pile through the first interface. The first charging gun is connected to the second interface. The method further includes: controlling the first switch to be turned off.

With reference to the third aspect, in some possible implementations, the method further includes: determining whether the remaining power of the first charging pile reaches the required power; and determining the shared power required by the first charging pile when the remaining power of the first charging pile is less than the required power.

According to a fourth aspect, this application provides a chip system. The chip system includes at least one processor, configured to implement functions in any one of the third aspect or the possible implementations of the third aspect, for example, receive or process data and/or information in the foregoing method.

In a possible design, the chip system further includes a memory. The memory is configured to store program instructions and data. The memory is located inside the processor or outside the processor.

The chip system may include a chip, or may include a chip and another discrete component.

According to a fifth aspect, this application provides a computer-readable storage medium. The computer storage medium stores a computer program (or may be referred to as code or instructions). When the computer program runs on a processor, the method in any one of the third aspect or the possible implementations of the third aspect is performed.

According to a sixth aspect, this application provides a computer program product. The computer program product includes a computer program (or may be referred to as code or instructions). When the computer program runs, the method in any one of the third aspect or the possible implementations of the third aspect is performed.

It should be understood that, technical solutions of the fourth aspect to the sixth aspect of this application correspond to a technical solution of the third aspect of this application, and beneficial effects obtained by each aspect and corresponding feasible implementations are similar and are not described in detail again.

### BRIEF DESCRIPTION OF DRAWINGS

FIG. 1A, FIG. 1B, and FIG. 1C are schematic diagrams of a node-based serial shared charging system;
FIG. 2 is a schematic diagram of a charging pile according to an embodiment of this application;
FIG. 3 is a schematic diagram of another charging pile according to an embodiment of this application;
FIG. 4 is a schematic diagram of a circuit of a charging pile according to an embodiment of this application;
FIG. 5A, FIG. 5B, FIG. 5C, and FIG. 5D are schematic diagrams of a charging system according to an embodiment of this application;
FIG. 6A, FIG. 6B, FIG. 6C, and FIG. 6D are schematic diagrams of another charging system according to an embodiment of this application;
FIG. 7 is a schematic flowchart of a charging method according to an embodiment of this application;
FIG. 8A and FIG. 8B are flowcharts of another example of a charging method according to an embodiment of this application; and
FIG. 9A, FIG. 9B, and FIG. 9C are flowcharts of still another example of a charging method according to an embodiment of this application.

### DESCRIPTION OF EMBODIMENTS

The following describes technical solutions in this application with reference to the accompanying drawings.

To clearly describe the technical solutions in embodiments of this application, terms such as "first" and "second" are used in embodiments of this application to distinguish between same items or similar items that provide basically same functions and purposes. For example, a first charging controller and a second charging controller are merely intended to distinguish between different charging controllers, but not to limit a sequence thereof. A person skilled in the art may understand that the terms such as "first" and "second" do not limit a quantity or a location, and the terms such as "first" and "second" do not indicate a definite difference.

In embodiments of this application, "at least one" means one or more, and "a plurality of" means two or more. The term "and/or" describes an association relationship between associated objects and may indicate three relationships. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may represent: a, b, c, a and b, a and c, b and c, or a, b, and c, where a, b, and c may be singular or plural.

To distinguish between switches with different functions, in embodiments of this application, different names are defined for the switches with different functions, for example, an intra-branch switch, an inter-branch switch, an interface switch, and an external switch. These names are defined only for distinguishing between different functions, and do not constitute any limitation on structures, locations, and a quantity of the switches. This application does not exclude a possibility of naming these switches by using other names.

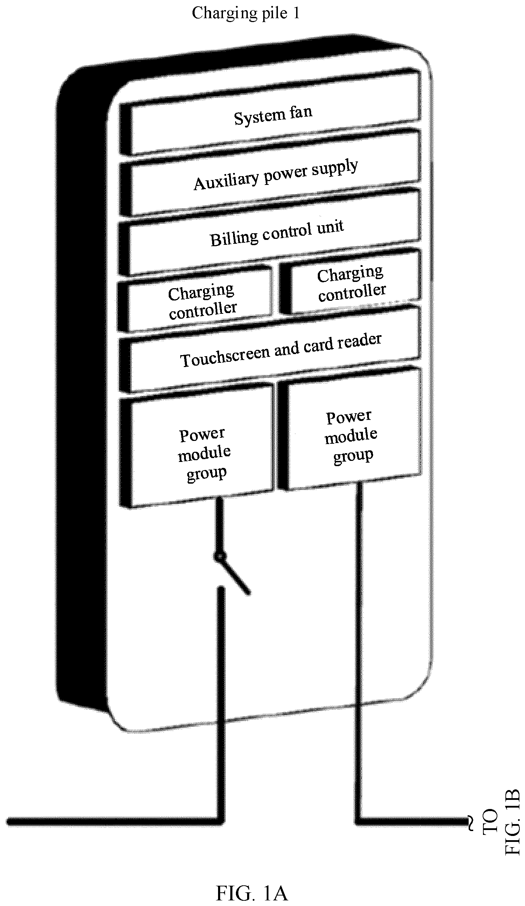

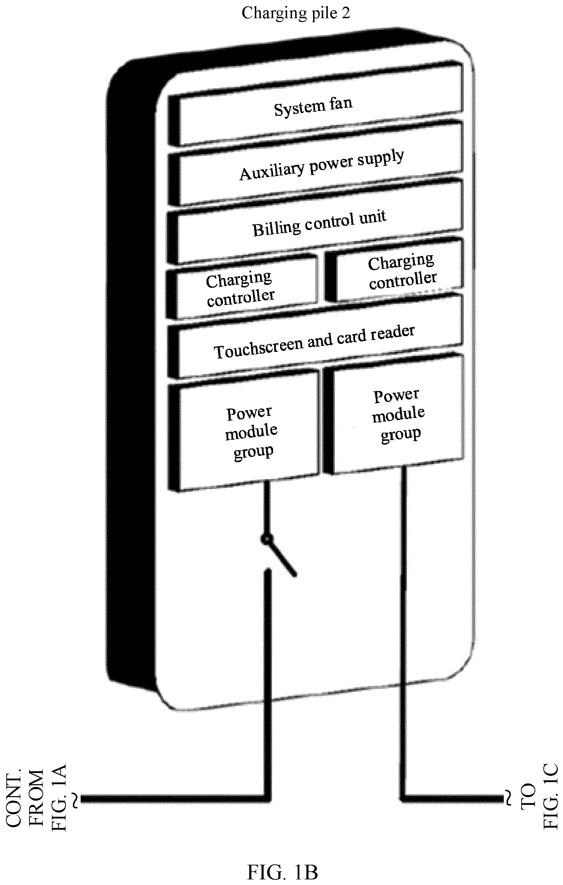

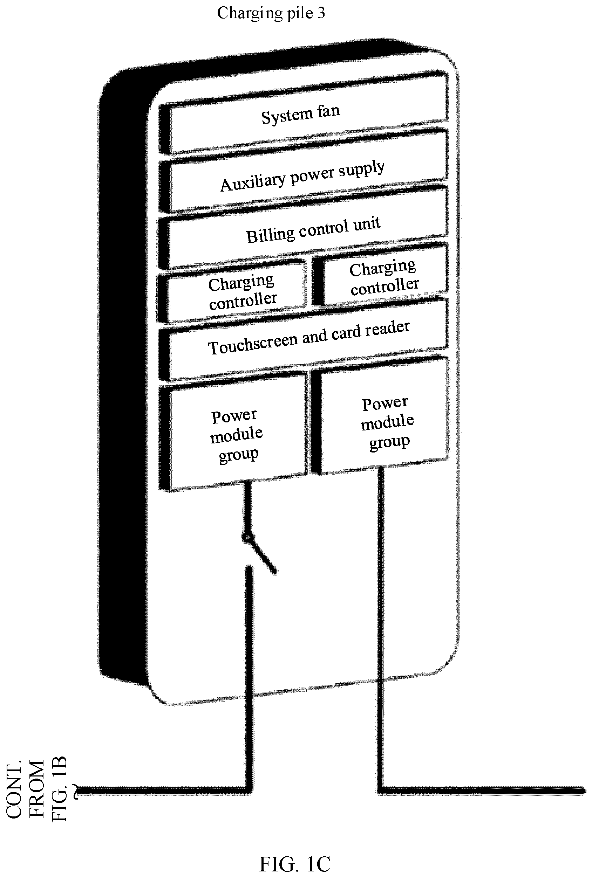

As described above, current power sharing of the charging pile is not flexible enough, resulting in a high power ratio of the charging pile and idle power in non-charging time. For ease of understanding, a known charging pile that can provide flexible power allocation is briefly described herein with reference to FIG. 1A, FIG. 1B, and FIG. 1C. The charging piles shown in FIG. 1A, FIG. 1B, and FIG. 1C may implement interconnection and power sharing in a "node-based" serial sharing manner. As shown in FIG. 1A, FIG. 1B, and FIG. 1C, in this "node-based" serial shared charging system, only power sharing between a charging pile and an adjacent pile can be implemented. For example, a charging pile 2 may separately share power with a charging pile 1 and a charging pile 3. However, the charging pile 1 cannot share the power with the charging pile 3. As a result, power sharing is not flexible enough. For example, when the charging pile 1 needs to share the power with another pile, the charging pile 1 shown in FIG. 1A is adjacent to only the charging pile 2, and therefore can share the power with only the charging pile 2. However, if the charging pile 2 is also currently in a charging state and has no remaining power for sharing, the charging pile 2 cannot provide shared power. In this case, even if the power of the charging pile 3 is idle, the charging pile 1 cannot share the power with the charging pile 3.

To resolve the foregoing problem, this application provides a charging pile, a charging system, and a charging method. A plurality of switches are disposed in the charging pile, and these switches may be disposed at different locations in the charging pile to implement different functions. For example, different charging branches in the charging pile may be connected, or a current charging pile may be connected to another charging pile. The switches with different functions are controlled to be turned on or turned off, so that different charging loops may be formed inside the charging system. Therefore, based on a charging request of a vehicle, when remaining power of a charging pile that currently receives the charging request of the vehicle cannot meet required power of the vehicle, shared power of another charging pile may be used, to implement flexible power sharing in the charging system.

It should be understood that the another charging pile, that is, a charging pile other than the current charging pile, may include a charging pile adjacent to the current charging pile, or may include a charging pile that is separated from the current charging pile by at least one charging pile. For ease of description, in this embodiment of this application, the charging pile adjacent to the current charging pile is referred to as an adjacent pile, and power sharing between the current charging pile and the adjacent pile is referred to as adjacent pile sharing. The charging pile that is separated from the current charging pile by at least one charging pile is referred to as a cross pile, and power sharing between the current charging pile and the cross pile is referred to as cross-pile sharing. In one charging pile, power sharing between different branches may be referred to as intra-pile sharing.

To better understand the charging pile, the charging system, and the charging method provided in embodiments of this application, the following describes the technical solutions in this application with reference to the accompanying drawings.

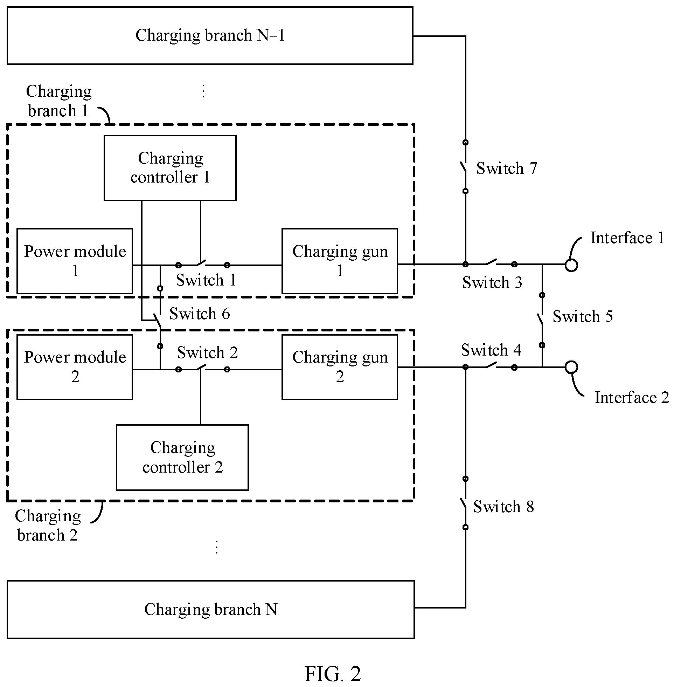

An embodiment of this application provides a charging pile. The charging pile includes N charging branches, K charging controllers, and M interfaces, where N ≥ K ≥ 1, N ≥ M ≥ 2, and N, K, and M are all integers. FIG. 2 shows a charging branch 1, a charging branch 2, ..., a charging branch N-1, a charging branch N, a charging controller 1, a charging controller 2, an interface 1, and an interface 2.

Each of the N charging branches includes a charging gun, a power module configured to supply power for the charging gun, and an intra-branch switch configured to connect to the charging gun and the power module. As shown in FIG. 2, the charging branch 1 includes the charging controller 1, a power module 1, a charging gun 1, and a switch 1. The charging branch 2 includes the charging controller 2, a power module 2, a charging gun 2, and a switch 2. Although FIG. 2 shows only the charging branch 1 and the charging branch 2 in detail, and does not show the charging branch N-1 and the charging branch N in detail, it may be understood that a structure of each charging branch is similar to those of the charging branch 1 and the charging branch 2.

Each of the K charging controllers is connected to at least one intra-branch switch. The at least one intra-branch switch is an intra-branch switch of one or more of the N charging branches. Each of the K charging controllers is configured to control a power module in a branch of one or more of the N charging branches to supply power for charging guns in the one or more charging branches. As shown in FIG. 2, the charging controller 1 is connected to the intra-branch switch 1 in the charging branch 1. The charging controller 2 is connected to the intra-branch switch 2 in the charging branch 2. It should be understood that one or more of the N charging branches may have independent charging controllers. For example, as shown in FIG. 2, the charging branch 1 has the independent charging controller 1, and the charging branch 2 has the independent charging controller 2. Alternatively, one or more of the N charging branches may share a same charging controller. For example, the charging branch 1 and another charging branch (for example, the charging branch 2) share a same charging controller (for example, the charging controller 1). This is not limited in this application.

The M interfaces are configured to connect to one or more charging piles other than the charging pile, and every two of the M interfaces may be turned on or off by using an interface switch. As shown in FIG. 2, the interface 1 and the interface 2 may be turned on or off by using an interface switch 5. Each of the N charging branches is connected to one of the M interfaces by using an external switch. As shown in FIG. 2, the charging branch 1 is connected to the interface 1 by using an external switch 3. The charging branch N-1 is connected to the interface 1 by using an external switch 7. The charging branch 2 is connected to the interface 2 by using an external switch 4. The charging branch N is connected to the interface 2 by using an external switch 8. It should be understood that the figure shows only N charging branches, two charging controllers, and two interfaces, but this should not constitute any limitation on this embodiment of this application. For example, the charging pile may further include more charging controllers and/or more interfaces. It should be further understood that the switch in this embodiment of this application may include but is not limited to a contactor and a relay. The interface in this embodiment of this application may also include an interface assembly or may be replaced with another component that has a same or similar function as the interface and that is specified in the national standard.

Based on the foregoing charging pile, when the charging gun in any charging branch in the charging pile receives a charging request of a vehicle, the charging gun and the power module may be turned on by controlling a related intra-branch switch to be turned on, so that the power module supplies power for the charging gun. When the remaining power of the charging pile is insufficient to meet a charging requirement of the vehicle and another charging pile needs to be requested for power sharing, external switches of the charging pile, an adjacent pile, and a cross pile are controlled to be turned on, or external switches and interface switches of the charging pile, an adjacent pile, and a cross pile are controlled to be turned on, so that the current charging pile may be connected to a circuit of the cross pile by using the adjacent pile. The related intra-branch switch of the cross pile is controlled to be turned on, so that the power module of the cross pile is connected to a circuit of the charging gun that is in the charging pile and that receives the charging request of the vehicle. Therefore, both the power module of the charging pile and the power module of the cross pile can supply the power for the charging gun, to implement cross-pile power sharing. This can implement flexible power sharing between the charging piles in the charging system.

Optionally, when the charging pile includes a plurality of charging branches, that is, N ≥ 2, the N charging branches may be further connected by using an inter-branch switch. As shown in FIG. 2, the charging branch 1 and the charging branch 2 are connected by using an inter-branch switch 6. The inter-branch switch 6 may be controlled by either the charging controller 1 or the charging controller 2. This is not limited in this embodiment of this application. It should be understood that FIG. 2 is merely an example, and other charging branches may also be connected by using the inter-branch switch. In a possible design, every two of the N charging branches are connected by using the inter-branch switch.

It should be noted that, in FIG. 2, the intra-branch switch 1 is referred to as the switch 1, the intra-branch switch 2 is referred to as the switch 2, the external switch 3 is referred to as a switch 3, the external switch 4 is referred to as a switch 4, the interface switch 5 is referred to as a switch 5, the inter-branch switch 6 is referred to as a switch 6, the external switch 7 is referred to as a switch 7, and the external switch 8 is referred to as a switch 8.

When the charging gun in any charging branch of the charging pile receives the charging request of the vehicle, the charging gun and the power module may be turned on by controlling the related intra-branch switch to be turned on, so that the power module supplies the power for the charging gun. When power of a power module connected to the charging gun is insufficient to meet the charging requirement of the vehicle, and a charging gun in another charging branch in the charging pile is in an idle state, or it may be understood that a power module in another charging branch in the charging pile is in an idle state, power sharing between charging branches in the charging pile may be preferentially considered, a circuit between the charging branch and another charging branch may be turned on by controlling turn-on of the inter-branch switch between related charging branches, so that both the power module in the another charging branch and the power module in the charging branch can supply the power for the charging gun, to implement power sharing between different branches in the charging pile. This can implement flexible power sharing between different charging branches of each charging pile in the charging system.

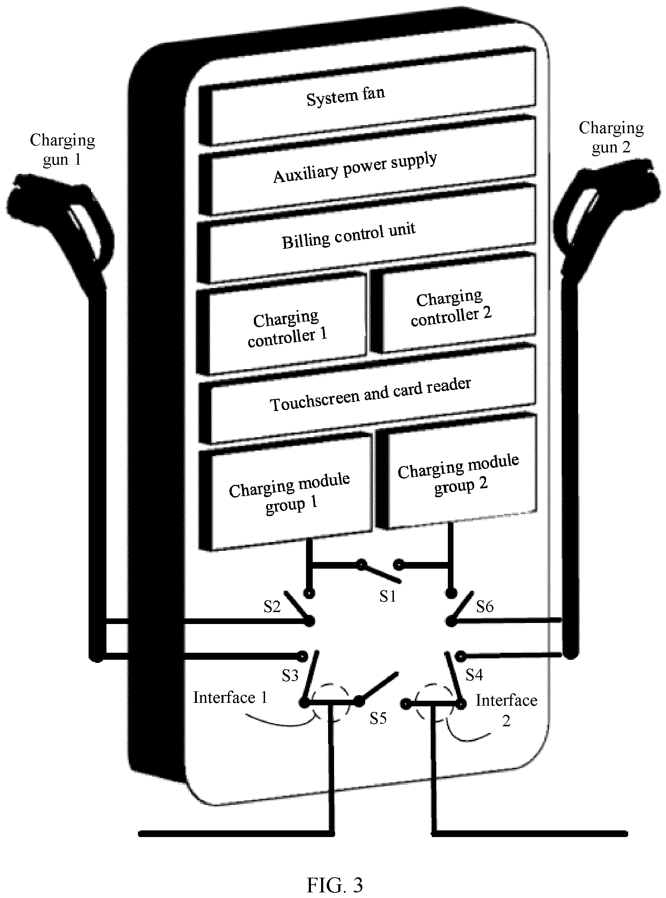

FIG. 3 is a schematic diagram of another charging pile according to an embodiment of this application. It should be understood that the charging pile shown in FIG. 3 is a schematic diagram of a charging pile when N = M = K = 2.

For example, when N = M = K = 2, the charging pile shown in FIG. 3 may include two charging branches, two charging controllers, two interfaces, and an interface switch.

Each of the two charging branches may further include a charging gun, for example, a charging gun 1 and a charging gun 2, a power module configured to supply power for the charging gun, for example, a power module group 1 and a power module group 2, and an intra-branch switch configured to connect to the charging gun and the power module, for example, S2 and S6 shown in FIG. 3. It should be understood that each power module group may include at least one power module. A quantity of power modules in the power module group is not limited in this application.

It should be noted that the charging gun 1, the power module group 1, and S2 may form a charging branch, which may be referred to as a charging branch 1. The charging gun 2, the power module group 2, and S6 may form another charging branch, which may be referred to as a charging branch 2.

The charging pile shown in FIG. 3 further includes two charging controllers, for example, a charging controller 1 and a charging controller 2, two interfaces, for example, an interface 1 and an interface 2, and an interface switch S5 configured to connect to the two interfaces. The charging gun 1 in the branch 1 may be connected to the interface 1 by using an external switch S3. The charging gun 2 in the branch 2 may be connected to the interface 2 by using an external switch S4. The two charging branches of the charging pile shown in FIG. 3 may be connected by using an inter-branch switch S1. S1 may be controlled by the charging controller 1 or the charging controller 2.

It should be understood that S1, S2, S3, S4, S5, and S6 are switches at different locations in the charging pile. In the following description, S1 is equivalent to the switch S1, S2 is equivalent to the switch S2, S3 is equivalent to the switch S3, S4 is equivalent to the switch S4, S5 is equivalent to the switch S5, and S6 is equivalent to the switch S6.

It should be further understood that the charging pile shown in FIG. 3 further includes a system fan, an auxiliary power supply, a billing control unit, a touchscreen, a card reader, and the like. The charging pile provided in this embodiment of this application may further include more or fewer components, units, or modules. In other words, values of M, N, and K are not limited in this embodiment of this application.

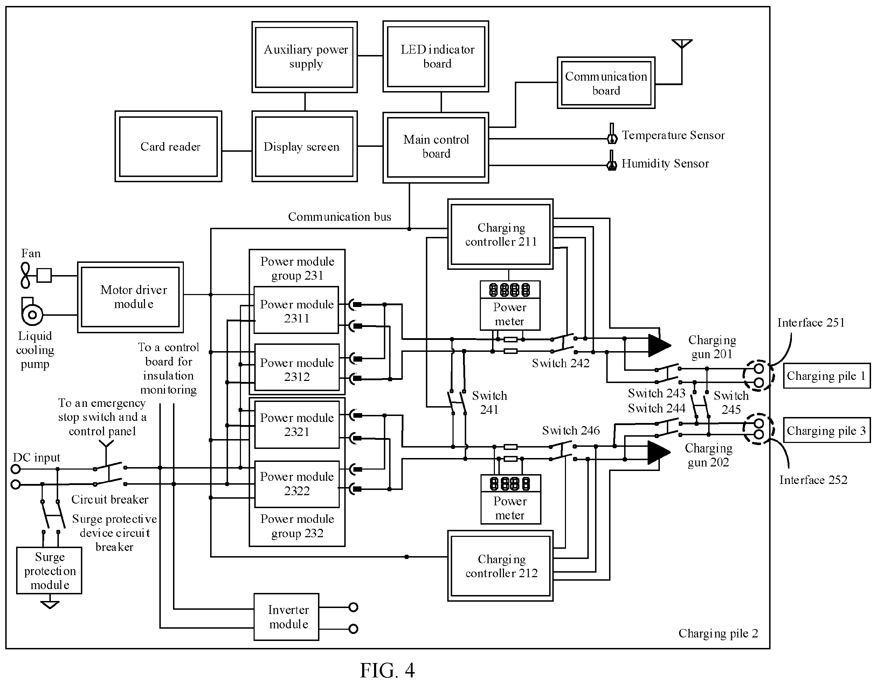

FIG. 4 is a schematic diagram of a circuit of a charging pile according to an embodiment of this application. A circuit design diagram of the charging pile shown in FIG. 4 may be an example used to implement the charging pile shown in FIG. 3.

In a circuit diagram of the charging pile 2 shown in FIG. 4, a charging gun 201 may correspond to the charging gun 1. A charging gun 202 may correspond to the charging gun 2. A power module group 231 may include a power module 2311 and a power module 2312. The power module group 231 may correspond to the power module group 1. A power module group 232 may include a power module 2321 and a power module 2322. The power module group 232 may correspond to the power module group 2. A charging controller 211 may correspond to the charging controller 1. A charging controller 212 may correspond to the charging controller 2. An interface 251 may correspond to the interface 1. An interface 252 may correspond to the interface 2. A switch 241 may correspond to the switch S1. A switch 242 may correspond to the switch S2. A switch 243 may correspond to the switch S3. A switch 244 may correspond to the switch S4. A switch 245 may correspond to the switch S5. A switch 246 may correspond to the switch S6.

It should be understood that, the power module group may include at least one power module as described above. A quantity of power modules in each power module group is not limited in this application.

The charging pile 2 may connect a connection circuit between the charging gun 201 and the power module group 231 by turning on the switch 242 (the switch 242 is an intra-branch switch), so that the power module group 231 can supply power for the charging gun 201. The charging pile 2 may connect a connection circuit between the charging gun 202 and the power module group 232 by turning on the switch 246 (the switch 246 is an intra-branch switch), so that the power module group 232 can supply power for the charging gun 202. The charging pile 2 may connect a connection circuit between the charging gun 201 and the power module group 231 and a connection circuit between the charging gun 201 and a charging module group 232 by turning on the switch 242 and the switch 241 (the switch 241 is an inter-branch switch), so that both the power module group 231 and the charging module group 232 can supply power for the charging gun 201. The charging pile 2 may connect a connection circuit between the charging gun 202 and the power module group 231 and a connection circuit between the charging gun 202 and a charging module group 232 by turning on the switch 246 and the switch 241, so that both the power module group 231 and the charging module group 232 can supply power for the charging gun 202.

FIG. 4 further shows adjacent piles of the charging pile 2: a charging pile 1 and a charging pile 3. It can be seen from the figure that the charging pile 2 may be connected to the charging pile 1 through the interface 251, and the charging pile 2 may be connected to the charging pile 3 through the interface 252. The charging pile 2 may connect a connection circuit between the charging gun 201 and the charging pile 1 by turning on the switch 243 (the switch 243 is an external switch). The charging pile 2 may connect a connection circuit between the charging gun 201 and the charging pile 3 by turning on the switch 243 and the switch 245 (the switch 245 is an interface switch). The charging pile 2 may connect a connection circuit between the charging gun 202 and the charging pile 3 by turning on the switch 244 (the switch 244 is an external switch). The charging pile 2 may connect a connection circuit between the charging gun 202 and the charging pile 1 by turning on the switch 244 and the switch 245.

In addition, FIG. 4 further shows an auxiliary power supply, a light-emitting diode (light-emitting diode, LED) indicator board, a communication board, a card reader, a display screen, a main control board, a temperature sensor, a humidity sensor, a communication bus, a fan, a liquid cooling pump, a motor driver module, a power meter, a circuit breaker, a surge protective device circuit breaker, a surge protection module, an inverter module, and the like. The charging pile provided in this embodiment of this application may further include more or fewer components, units, or modules, and this is not limited in this embodiment of this application.

This application further provides a charging system. The charging system includes a plurality of charging piles described above, which may be the charging piles shown in FIG. 2, FIG. 3, and FIG. 4. Each charging pile is connected to one or more charging piles through an interface. As shown in FIG. 4, the charging pile 2 is connected to the charging pile 1 through the interface 251. The charging pile 2 may be connected to the charging pile 3 through the interface 252.

The charging system includes a plurality of charging piles described above, and these charging piles may be circuit-connected to each other through interfaces. Therefore, when power of any charging pile is less than required power of a vehicle, the charging pile may use power from a charging pile other than the charging pile in the charging system. For example, the charging pile may send a power sharing request to the charging pile other than the charging pile. After a controller controls a switch to be turned on to connect a circuit between the two charging piles, the two charging piles can charge the vehicle in a power sharing manner, and this implements flexible power sharing in the charging system.

It should be understood that, in the foregoing charging system, the charging piles may also communicate with each other through the communication bus. Therefore, when one charging pile in the charging system cannot meet a power requirement of the vehicle, the charging pile may send the power sharing request to the charging pile other than the charging pile in the charging system through the communication bus.

A first charging gun in a first charging pile in the charging system may be configured to receive a charging request from the vehicle. The charging request may include required power for charging of the vehicle. The first charging gun may be further configured to forward the charging request to a first charging controller connected to the first charging gun. The first charging controller may be configured to determine, based on the received charging request, whether remaining power of the first charging pile reaches the required power of the vehicle. When the remaining power of the first charging pile is less than the required power of the vehicle, the first charging controller may be further configured to determine, based on the required power of the vehicle, the shared power required by the first charging pile. The shared power may be a difference between the remaining power of the first charging pile and the required power of the vehicle.

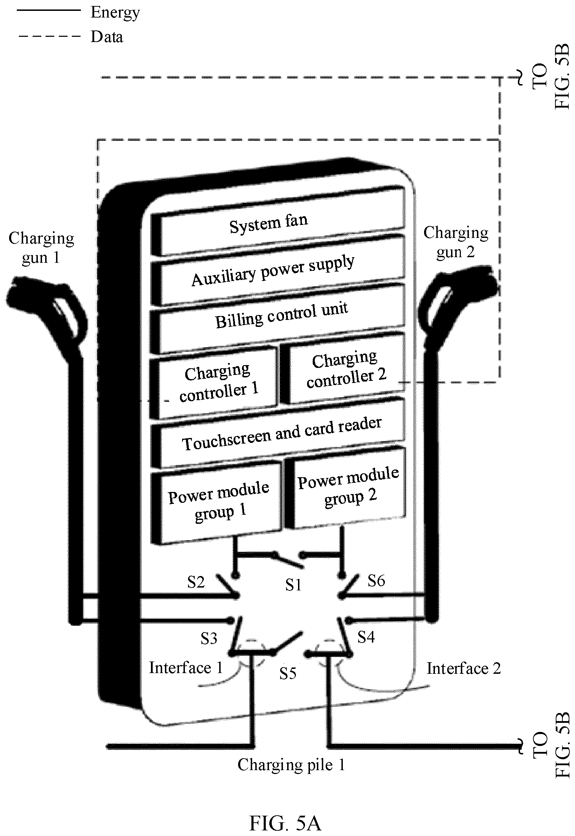

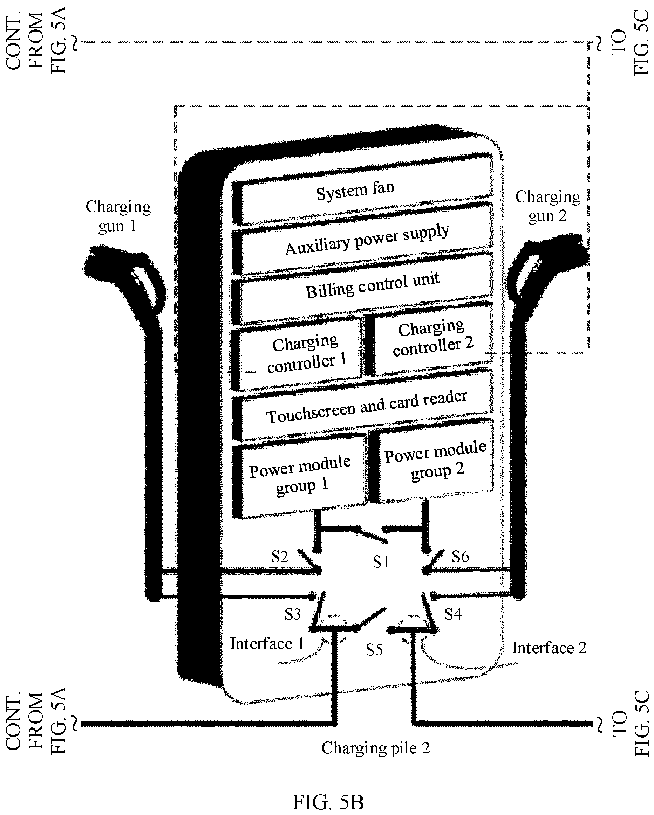

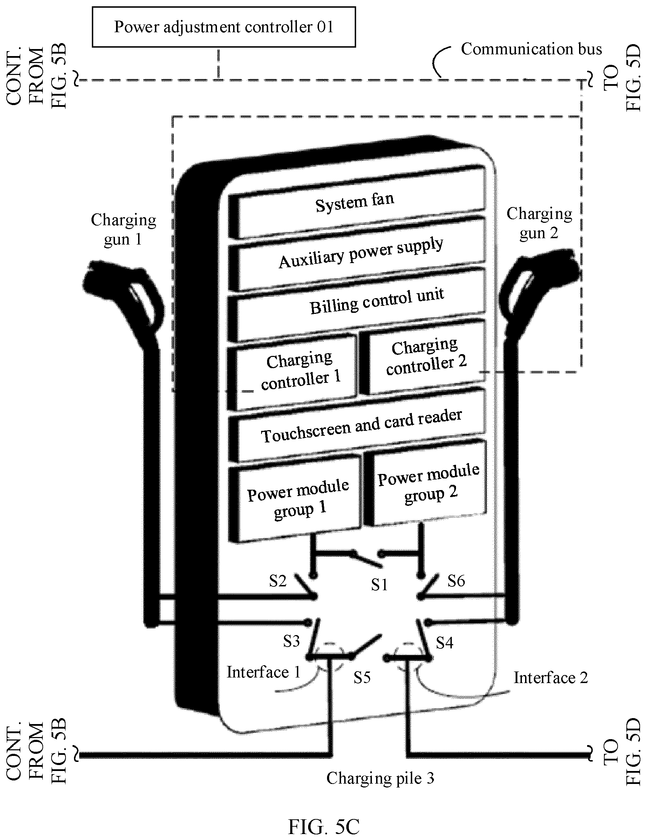

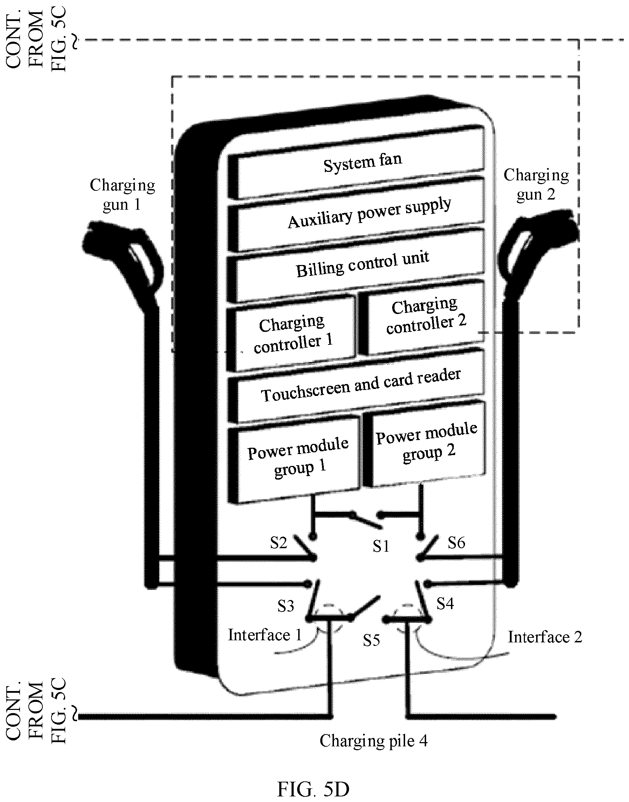

FIG. 5A, FIG. 5B, FIG. 5C, and FIG. 5D are schematic diagrams of a charging system according to an embodiment of this application. A charging pile 1, a charging pile 2, a charging pile 3, and a charging pile 4 shown in FIG. 5A, FIG. 5B, FIG. 5C, and FIG. 5D may be the charging piles shown in FIG. 2, FIG. 3, or FIG. 4. It should be understood that FIG. 5A, FIG. 5B, FIG. 5C, and FIG. 5D are merely examples. In an actual scenario, the charging system provided in this embodiment of this application may include more or fewer charging piles. A specific quantity of charging piles included in the charging system is not limited in this application.

In a possible design, the charging system may further include a power adjustment controller. The power adjustment controller is connected to each charging controller of each charging pile in the charging system through a communication bus. A relationship between the power adjustment controller and each charging controller of each charging pile may be referred to as a primary/secondary control relationship. In other words, the power adjustment controller is a primary controller, and each charging controller of each charging pile is a secondary controller. The power adjustment controller may control each charging controller of each charging pile.

In this case, a first charging controller may be configured to send a power sharing request to the power adjustment controller. The power sharing request includes shared power. The power sharing request is used to request the power adjustment controller to determine, from one or more charging piles other than a first charging pile, a target charging pile whose remaining power is greater than or equal to the shared power. The power adjustment controller may be further configured to determine the target charging pile from the one or more charging piles based on the power sharing request. The power adjustment controller may be further configured to send the power sharing request to a charging controller (for ease of differentiation and description, may be referred to as a second charging controller) of the target charging pile.

As shown in FIG. 5A, FIG. 5B, FIG. 5C, and FIG. 5D, the power adjustment controller is connected to a charging controller 1 and a charging controller 2 of the charging pile 1, a charging controller 1 and a charging controller 2 of the charging pile 2, a charging controller 1 and a charging controller 2 of the charging pile 3, and a charging controller 1 and a charging controller 2 of the charging pile 4 through communication buses.

It is assumed that the charging system includes the charging pile 1, the charging pile 2, the charging pile 3, and the charging pile 4. The charging pile 2 is the first charging pile. The charging controller 1 of the charging pile 2 is the first charging controller. The charging controller 1 of the charging pile 2 may send the power sharing request to the power adjustment controller. The power sharing request includes the shared power. The power sharing request is used to request the power adjustment controller to determine, from other charging piles (for example, the charging pile 1, the charging pile 3, and the charging pile 4) in the charging system, the target charging pile whose remaining power is greater than or equal to the shared power. The power adjustment controller may be further configured to determine, based on the power sharing request, the target charging pile, for example, the charging pile 3, from the other charging piles in the charging system. The power adjustment controller may be further configured to send the power sharing request to the charging controller of the charging pile 3.

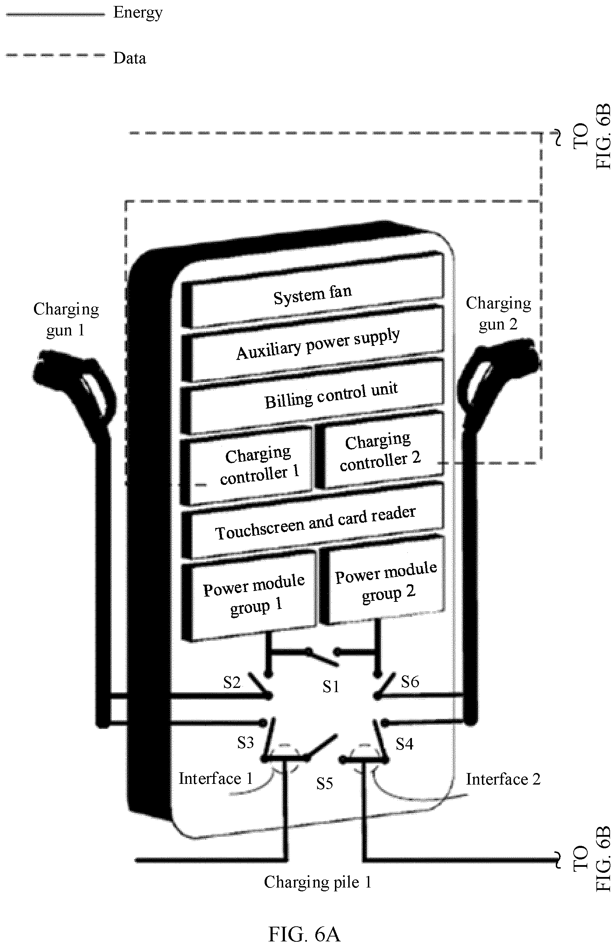

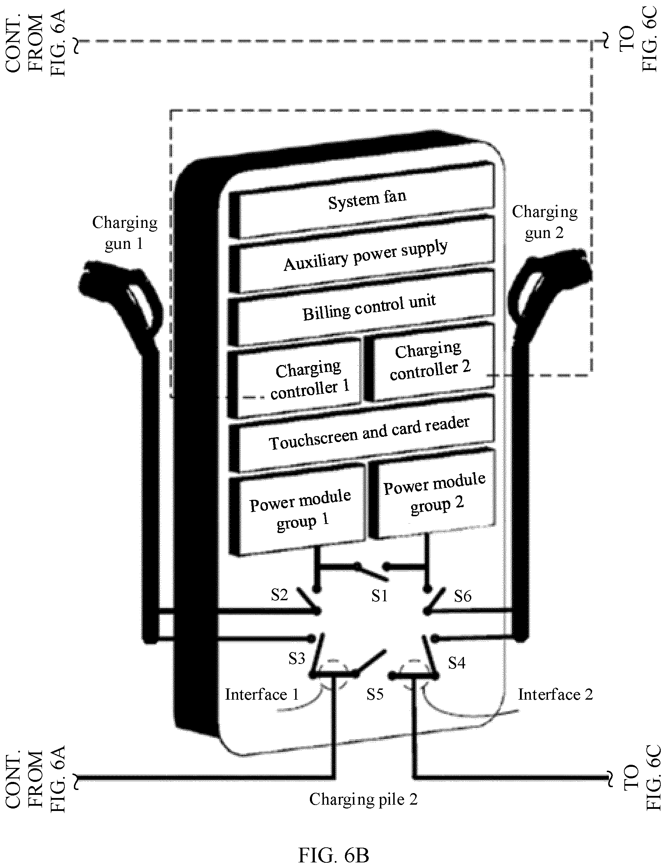

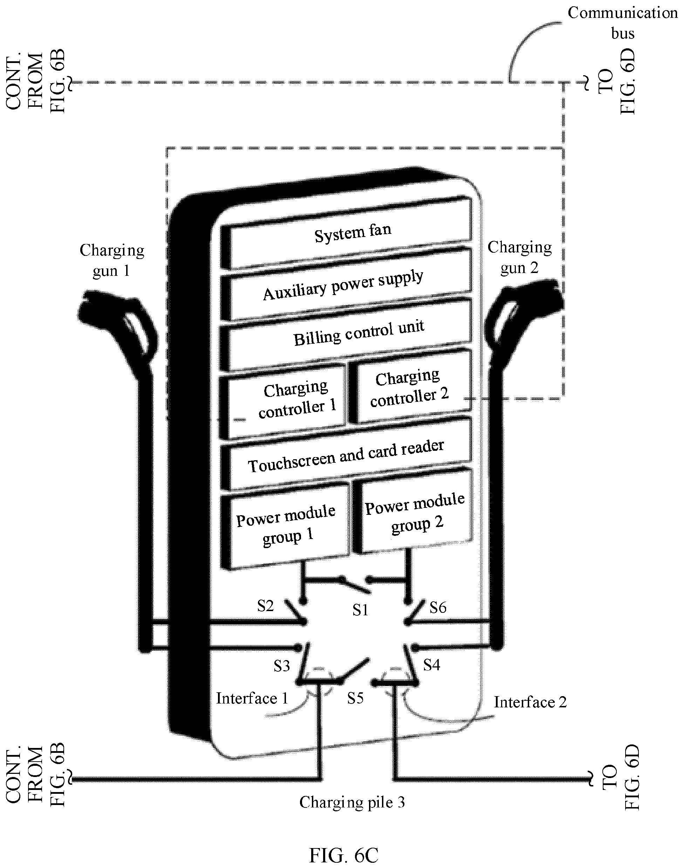

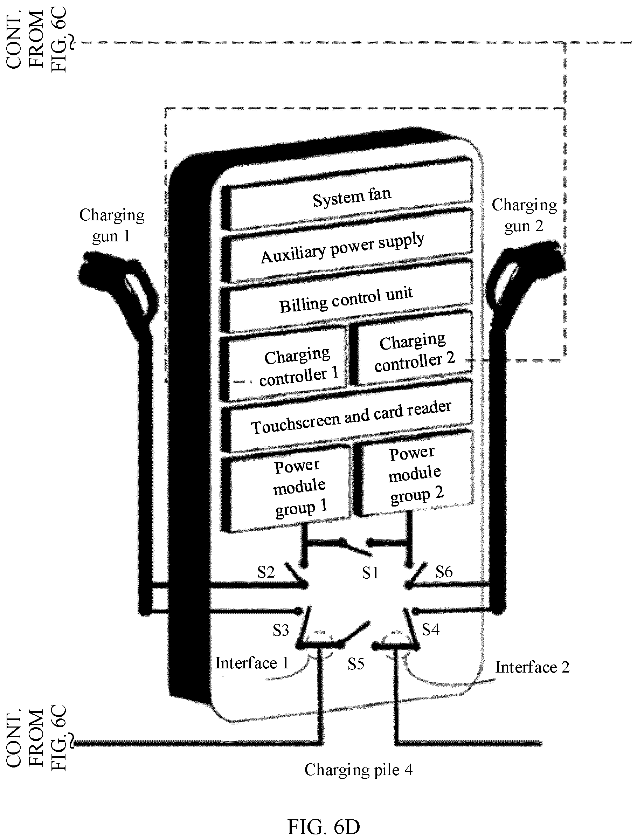

FIG. 6A, FIG. 6B, FIG. 6C, and FIG. 6D are schematic diagrams of another charging system according to an embodiment of this application. A charging pile 1, a charging pile 2, a charging pile 3, and a charging pile 4 shown in FIG. 6A, FIG. 6B, FIG. 6C, and FIG. 6D may be the charging piles shown in FIG. 2, FIG. 3, or FIG. 4. It should be understood that FIG. 6A, FIG. 6B, FIG. 6C, and FIG. 6D are merely examples. In an actual scenario, the charging system provided in this embodiment of this application may include more or fewer charging piles. A specific quantity of charging piles included in the charging system is not limited in this application.

As shown in FIG. 6A, FIG. 6B, FIG. 6C, and FIG. 6D, a charging controller 1 and a charging controller 2 of the charging pile 1, a charging controller 1 and a charging controller 2 of the charging pile 2, a charging controller 1 and a charging controller 2 of the charging pile 3, and a charging controller 1 and a charging controller 2 of the charging pile 4 are connected to each other through communication buses.

In another possible design, a relationship between charging controllers of charging piles may be referred to as a peer-to-peer control relationship. In other words, each charging controller of each charging pile may control a charging controller other than the charging controller of the charging pile in a peer-to-peer manner.

A first charging controller is configured to determine, based on shared power, a target charging pile from one or more charging piles other than a first charging pile in the charging system. The target charging pile is a charging pile whose remaining power is greater than or equal to the shared power in the one or more charging piles. The target charging pile is one charging pile that is closest to the first charging pile and that is one of one or more charging piles whose remaining power is greater than or equal to the shared power.

The first charging controller may be further configured to: after determining the target charging pile, send a power sharing request including the shared power to a charging controller of the target charging pile. The power sharing request is used to request to obtain the shared power from the target charging pile.

As shown in FIG. 6A, FIG. 6B, FIG. 6C, and FIG. 6D, the charging controller 1 and the charging controller 2 of the charging pile 1, the charging controller 1 and the charging controller 2 of the charging pile 2, the charging controller 1 and the charging controller 2 of the charging pile 3, and the charging controller 1 and the charging controller 2 of the charging pile 4 are connected to each other through the communication buses.

In this possible design, it is assumed that the charging pile 2 is the first charging pile, and the charging controller 1 of the charging pile 2 is the first charging controller. In this case, the charging controller 1 of the charging pile 2 may be configured to determine the target charging pile from the charging pile 1, the charging pile 3, and the charging pile 4 based on the shared power. The charging controller 1 of the charging pile 2 may be further configured to send the power sharing request to a second charging controller. The power sharing request includes the shared power. The power sharing request is used to obtain the shared power from the target charging pile. The second charging controller is a charging controller of the target charging pile.

In a possible design, when remaining power of a plurality of branches of the target charging pile is greater than the shared power, the second charging controller may be a charging controller in a charging branch with a largest number in these branches, or may be a charging controller in a charging branch with a smallest number in these branches.

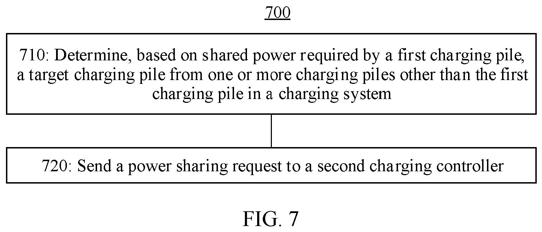

Based on the charging pile and the charging system, this application further provides a charging method. The following describes in detail the charging method provided in this application with reference to FIG. 7.

FIG. 7 is a schematic flowchart of a charging method according to an embodiment of this application.

It should be understood that the charging method may be applied to the foregoing charging system. More specifically, the charging method may be performed by a controller in the charging system. For example, the charging system may be the charging system that includes the power adjustment controller and that is shown in FIG. 5A, FIG. 5B, FIG. 5C, and FIG. 5D. The controller may be the power adjustment controller. Alternatively, the charging system may be the charging system that includes no power adjustment controller and that is shown in FIG. 6A, FIG. 6B, FIG. 6C, and FIG. 6D. The controller may be a first charging controller configured to control a first power module or a first power module group in a first charging pile to supply power for a first charging gun. This is not limited in this embodiment of this application.

As shown in FIG. 7, the method 700 includes step 710 and step 720. The following describes the steps in the method 700 in detail.

Step 710: Determine, based on shared power required by the first charging pile, a target charging pile from one or more charging piles other than the first charging pile in the charging system.

It should be understood that the target charging pile is a charging pile whose remaining power is greater than or equal to the shared power in the one or more charging piles.

When a vehicle needs to be charged, the vehicle may interact with the charging pile by using a charging gun of the charging pile. For example, the vehicle may send a charging request to the charging gun by connecting to the charging gun. The charging request may include required power for charging of the vehicle.

Before the step 710, the controller may first determine whether remaining power of the first charging pile reaches the required power, and determine the shared power required by the first charging pile when the remaining power of the first charging pile is less than the required power.

When the first charging controller in the first charging pile performs the step 710, the first charging controller may receive the charging request from the first charging gun, and determine the shared power.

The shared power may be determined based on the remaining power of the first charging pile and the required power of the vehicle. For example, when the remaining power of the first charging pile is less than the required power of the vehicle, the shared power is a difference between the required power of the vehicle and the remaining power of the first charging pile. The required power may be included in the charging request received by the first charging gun in the first charging pile.

When the power adjustment controller performs the step 710, the power adjustment controller may receive a power sharing request from the first charging controller. The power sharing request includes the shared power.

It should be further understood that when the remaining power of the first charging pile is greater than the required power of the vehicle, the remaining power of the first charging pile is sufficient to meet a charging power requirement of the vehicle, and there is no need to calculate the shared power or share power with another charging pile. Therefore, the target charging pile does not need to be determined.

That the target charging pile is determined, based on the shared power required by the first charging pile, from the one or more charging piles other than the first charging pile in the charging system includes: sequentially query remaining power of each of the one or more charging piles other than the first charging pile in the charging system, and determine the target charging pile based on the shared power and a distance between each of the one or more other charging piles and the first charging pile. The target charging pile is one charging pile that is closest to the first charging pile and that is one of one or more charging piles whose remaining power is greater than or equal to the shared power.

For example, if the charging system is the charging system that includes the power adjustment controller and that is shown in FIG. 5A, FIG. 5B, FIG. 5C, and FIG. 5D, the power adjustment controller may learn of the remaining power of the one or more charging piles other than the first charging pile in the charging system through sequentially querying, exclude, based on the shared power required by the first charging pile, a charging pile whose remaining power is less than the shared power other than the first charging pile, and determine, from charging piles whose remaining power is greater than the shared power other than the first charging pile, the charging pile that is closest to the first charging pile as the target charging pile.

If there are two charging piles whose remaining power is greater than the shared power other than the first charging pile, and distances between the two charging piles and the first charging pile are equal and shortest, a charging pile with a smaller number in the two charging piles may be determined as the target charging pile, or a charging pile with a larger number in the two charging piles may be determined as the target charging pile. This is not limited in this application.

It should be understood that, that the charging pile that is closest to the first charging pile is determined as the target charging pile from the charging piles whose remaining power is greater than the shared power other than the first charging pile may also be understood as that a charging pile with a smallest number difference from the first charging pile is determined as the target charging pile from the charging piles whose remaining power is greater than the shared power other than the first charging pile. This is not limited in this application.

If it is learned, through sequentially querying, that there is currently no charging pile whose remaining power is greater than the shared power in the charging system, a corresponding switch may be first controlled to be turned on or turned off, so that a circuit between the power module of the first charging pile and the first charging gun is connected. The vehicle may be first charged by using the first charging gun, and sequentially querying continues. When another charging pile whose charging power is greater than the shared power is found through sequentially querying, the target charging pile is determined.

For another example, if the charging system is the charging system that includes no power adjustment controller and that is shown in FIG. 6A, FIG. 6B, FIG. 6C, and FIG. 6D, the method performed by the power adjustment controller may be performed by the first controller. For brevity, details are not described herein again. Refer to the foregoing related description for more details.

In another possible implementation, that the target charging pile is determined, based on the shared power required by the first charging pile, from the one or more charging piles other than the first charging pile in the charging system may include: determine, based on the shared power, the target charging pile from the one or more charging piles in ascending order of distances from the first charging pile. The target charging pile is one charging pile that is closest to the first charging pile and that is one of one or more charging piles whose remaining power is greater than or equal to the shared power.

For example, if the charging system is the charging system that includes the power adjustment controller and that is shown in FIG. 5A, FIG. 5B, FIG. 5C, and FIG. 5D, the power adjustment controller may first determine, based on the shared power and in ascending order of the distances from the first charging pile, whether remaining power of an adjacent charging pile of the first charging pile is greater than the shared power. If the adjacent power of the first charging pile is greater than the shared power, determine the adjacent charging pile as the target charging power. The adjacent charging pile may be understood as a charging pile whose number difference from the first charging pile is 1.

It should be understood that if the first charging pile has two adjacent charging piles, and the remaining power of the two adjacent charging piles is greater than the shared power, a charging pile with higher remaining power may be determined as the target charging pile. If power of the two adjacent charging piles is equal and greater than the shared power, a charging pile with a smaller number in the two charging piles may be determined as the target charging pile, or a charging pile with a larger number in the two charging piles may be determined as the target charging pile. This is not limited in this application. If the remaining power of the adjacent charging pile of the first charging pile is less than the shared power, it may be sequentially determined whether remaining power of a cross pile whose number difference from the first charging pile is 2 is greater than the shared power. If the remaining power of the charging pile whose number difference from the first charging pile is 2 is less than the shared power, it may be determined whether remaining power of a charging pile whose number difference from the first charging pile is 3 is greater than the shared power. If the remaining power of the charging pile whose number difference from the first charging pile is 3 is less than the shared power, whether the remaining power of the remaining charging pile in the charging system is greater than the shared power is determined by analogy. Finally, a charging pile whose remaining power is greater than the shared power other than the first charging pile and that is closest to the first charging pile is determined as the target charging pile.

If there are two charging piles whose number differences from the first charging pile are the same and whose remaining power is greater than the shared power, a charging pile with higher remaining power in the two charging piles may be determined as the target charging pile. If there are two charging piles whose number differences from the first charging pile are the same and whose remaining power is equal and greater than the shared power, a charging pile with a smaller number in the two charging piles may be determined as the target charging pile, or a charging pile with a larger number in the two charging piles may be determined as the target charging pile. This is not limited in this application.

If there is no charging pile whose remaining power is greater than the shared power after sequentially determining in ascending order of distances, a corresponding switch may be first controlled to be turned on or turned off, so that a circuit between the power module of the first charging pile and the first charging gun is connected. The vehicle may be first charged by using the first charging gun, and sequentially determining in ascending order of distances continues. When there is another charging pile whose charging power is greater than the shared power, the target charging pile is determined.

For another example, if the charging system is the charging system that includes no power adjustment controller and that is shown in FIG. 6A, FIG. 6B, FIG. 6C, and FIG. 6D, the method performed by the power adjustment controller may be performed by the first controller. For brevity, details are not described herein again. Refer to the foregoing related description for more details.

Step 720: Send the power sharing request to a second charging controller.

The second charging controller is a charging controller of the target charging pile. The power sharing request includes the shared power. The power sharing request is used to request to obtain the shared power from the target charging pile.

The power sharing request may include an identifier or a number (for example, the charging pile 1) of the first charging pile and a value of the shared power required by the first charging pile, and may further include an identifier or a number of the target charging pile. This is not limited in this application.

For example, if the charging system is the charging system that includes the power adjustment controller and that is shown in FIG. 5A, FIG. 5B, FIG. 5C, and FIG. 5D, the power adjustment controller may send the power sharing request to the second charging controller. The power sharing request is used to request to obtain the shared power from the target charging pile.

For another example, if the charging system is the charging system that includes no power adjustment controller and that is shown in FIG. 6A, FIG. 6B, FIG. 6C, and FIG. 6D, the first charging controller may send the power sharing request to the second charging controller. The power sharing request is used to request to obtain the shared power from the target charging pile.

The first charging pile includes a first interface, a second interface, and a first switch located between the first interface and the second interface. The first switch is an interface switch. The first charging pile is connected to the target charging pile through the first interface. The first charging gun is connected to the second interface. After the power sharing request is sent to the second charging controller, when the interface switch needs to be turned on to connect a circuit between the first charging pile and the target charging pile, the first switch may be controlled to be turned on, or when a circuit between the first charging pile and the target charging pile can be connected without turning on the interface switch, the first switch may be controlled to be turned off. For example, in the charging system shown in FIG. 6A, FIG. 6B, FIG. 6C, and FIG. 6D, when the power module group 2 of the charging pile 2 and the charging module group 2 of the charging pile 1 share power, S5 of the charging pile 2 needs to be turned on; or when the power module group 2 of the charging pile 2 and the charging module group 1 of the charging pile 3 share power, S5 of the charging pile 2 does not need to be turned on.

In a possible implementation, the first charging controller of the first charging pile may first determine whether power of the first power module or the first power module group that is in the first charging pile and that is connected to the first charging gun is greater than the required power of the vehicle. When the power of the first power module or the first power module group is less than the required power, whether another branch of the first charging pile has remaining power may be determined. When a sum of the power of the first power module or the first power module group and the remaining power of the another branch is greater than the shared power, the power may be shared in the pile. In other words, the power may be shared between a branch in which the first charging gun is located and a branch that has the remaining power. In this case, when the remaining power of the first charging pile is greater than the required power, the first charging pile may share the power in the pile, and does not need to share the power with another charging pile.

According to the foregoing method, when the power of the first charging pile cannot meet the charging power of the vehicle, another charging pile may be requested to share the power based on the charging request of the vehicle, a target charging pile that can share the power is determined based on the shared power, remaining power of the another charging pile, and a distance from the first charging pile, and the power sharing request is sent to the target charging pile, to implement power sharing between the target pile and the charging pile that receives the charging request of the vehicle. This can implement intra-pile sharing, adjacent pile sharing, and cross-pile sharing, and can implement flexible power sharing in the charging system.

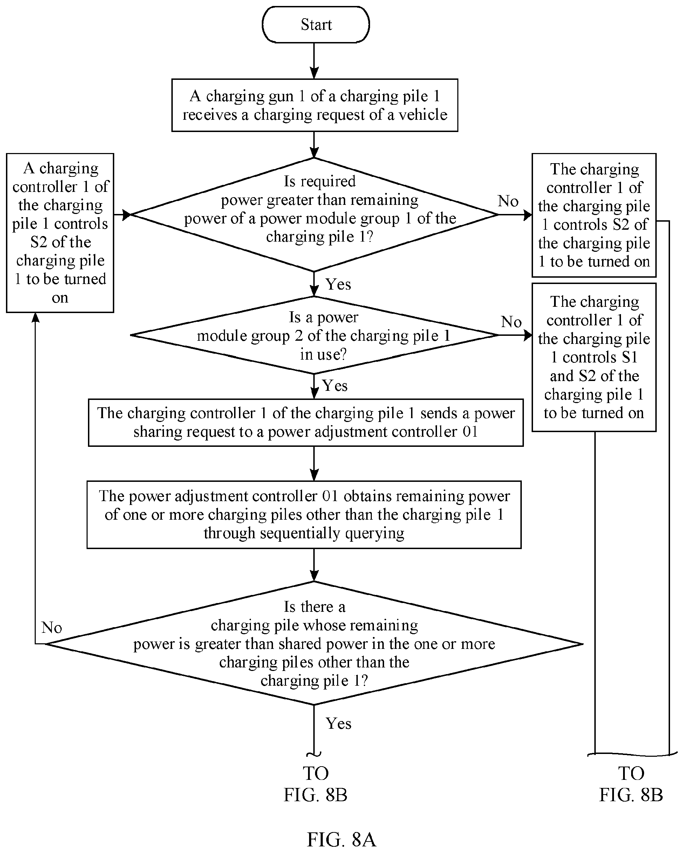

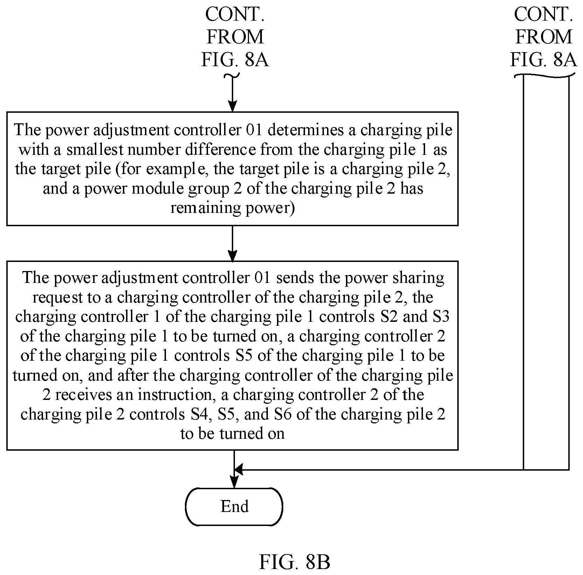

The following describes a process of the charging method provided in this application by using an example with reference to FIG. 8A and FIG. 8B.

FIG. 8A and FIG. 8B are flowcharts of another example of a charging method according to an embodiment of this application. FIG. 8A and FIG. 8B are merely examples, and should not constitute any limitation on the charging method provided in this application.

In FIG. 8A and FIG. 8B, the charging system that includes the power adjustment controller and that is shown in FIG. 5A, FIG. 5B, FIG. 5C, and FIG. 5D is used as an example. The charging gun 1 of the charging pile 1 receives a charging request of a vehicle.

When required power is less than remaining power of the power module group 1 of the charging pile 1, the charging controller 1 of the charging pile 1 controls S2 of the charging pile 1 to be turned on, and the power module group 1 of the charging pile 1 charges the vehicle by using the charging gun 1 of the charging pile 1.

When required power is greater than remaining power of the power module group 1 of the charging pile 1, but the power module group 2 of the charging pile 1 is not used, it may also be understood that when the required power is less than total remaining power of the power module group 1 of the charging pile 1 and the power module group 2 of the charging pile 1, the charging controller 1 of the charging pile 1 controls S1 and S2 of the charging pile 1 to be turned on, and the power module group 1 of the charging pile 1 and the power module group 2 of the charging pile 1 may charge the vehicle by using the charging gun 1 of the charging pile 1.

When required power is greater than remaining power of the power module group 1 of the charging pile 1, and the power module group 2 of the charging pile 1 is in use, that is, when total remaining power of the charging pile 1 is less than the required power of the vehicle, the charging controller 1 of the charging pile 1 may send a power sharing request to the power adjustment controller 01. In this case, the power sharing request may include only an identifier or a number of the charging pile 1 and shared power. After receiving the power sharing request, the power adjustment controller may obtain remaining power of a charging pile other than the charging pile 1 through sequentially querying. The power adjustment controller 01 may determine, based on the obtained remaining power of the charging pile other than the charging pile 1, whether there is a charging pile whose remaining power is greater than the shared power in the charging system.

If there is the charging pile whose remaining power is greater than the shared power, the power adjustment controller 01 may determine a charging pile with a smallest number difference from the charging pile 1 as the target charging pile. For example, the target charging pile is the charging pile 2, and the power module group 2 of the charging pile 2 has the remaining power. In this case, the power adjustment controller 01 may send the power sharing request to the charging controller of the charging pile 2. After receiving the power sharing request, the charging controller of the charging pile 2 may determine which switches need to be turned on or turned off, for example, the charging controller 2 of the charging pile 2 may control S4, S5, and S6 of the charging pile 2 to be turned on. In addition, the charging controller 1 of the charging pile 1 may control S2 and S3 of the charging pile 1 to be turned on, and the charging controller 2 of the charging pile 1 may control S5 of the charging pile 1 to be turned on, so that the power module group 1 of the charging pile 1 and the power module group 2 of the charging pile 2 may charge the vehicle by using the charging gun 1 of the charging pile 1.

If there is no charging pile whose remaining power is greater than the shared power, the charging controller 1 of the charging pile 1 may control S2 of the charging pile 1 to be turned on, so that the power module group 1 of the charging pile 1 may first independently charge the vehicle by using the charging gun 1 of the charging pile 1, and then continue to perform the foregoing determining logic until the vehicle is fully charged or charging ends (for example, the charging gun is disconnected from the vehicle).

It should be understood that, in the foregoing power sharing process, when the required power of the vehicle is less than the remaining power of the charging controller 1 of the charging pile 1 in a time period, a related controller may control a related switch to be turned off. For example, in a process of adjacent pile sharing between the charging pile 1 and the charging pile 2, the charging controller 2 of the charging pile 1 may control S5 of the charging pile 1 to be turned off, and/or, the charging controller 2 of the charging pile 2 may control S4, S5, and S6 of the charging pile 2 to be turned off, so that the power module group 1 of the charging pile 1 can independently charge the vehicle by using the charging gun 1 of the charging pile 1. This is not limited in this embodiment of this application.

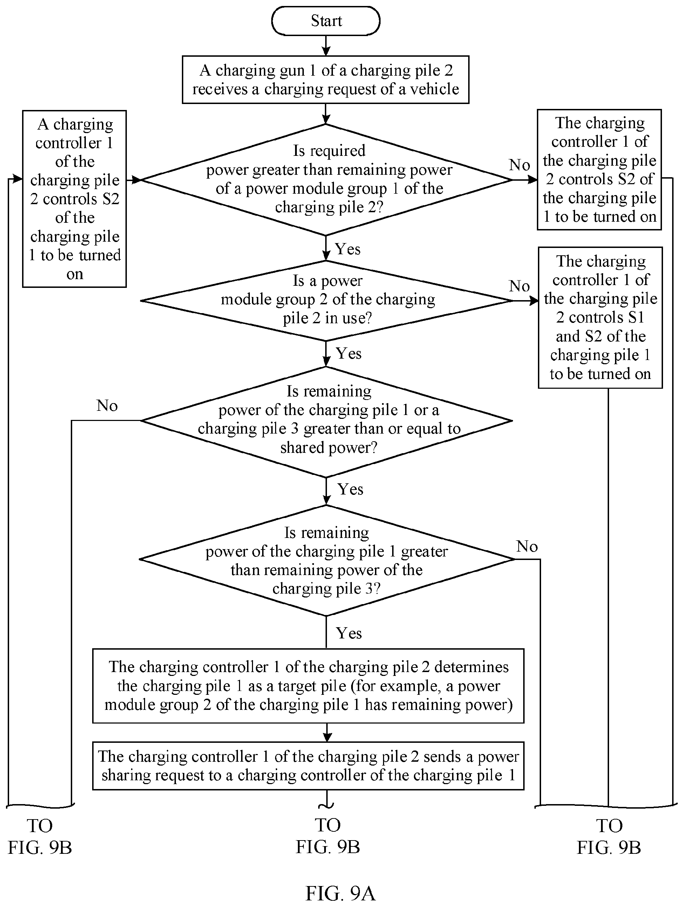

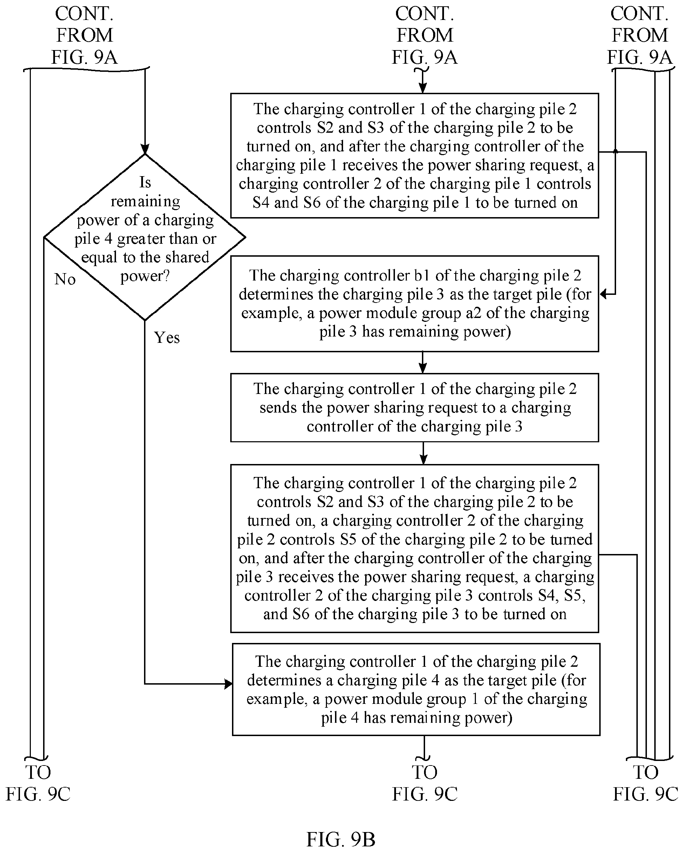

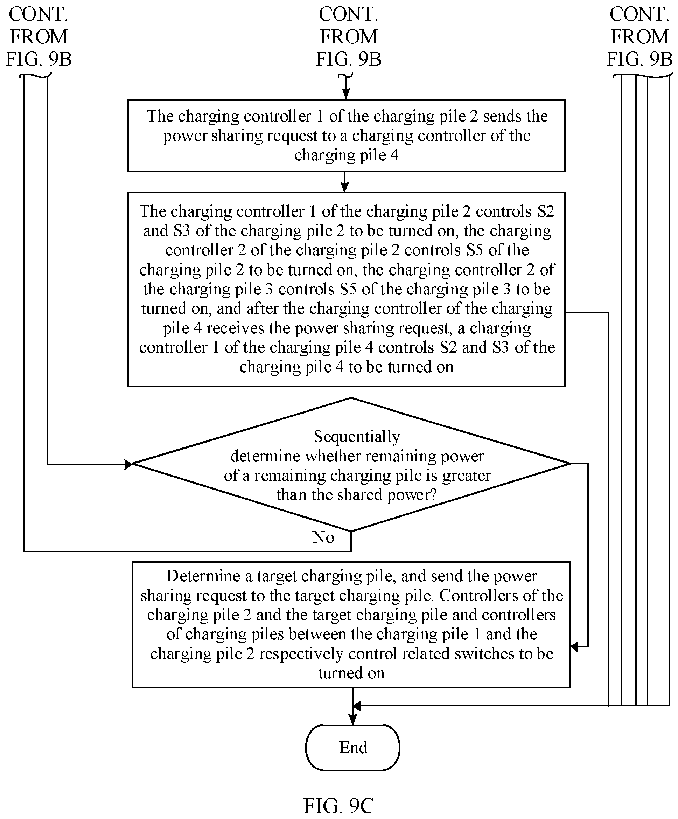

The following describes a process of the charging method provided in this application by using an example with reference to FIG. 9A, FIG. 9B, and FIG. 9C.

FIG. 9A, FIG. 9B, and FIG. 9C are flowcharts of still another example of a charging method according to an embodiment of this application. FIG. 9A, FIG. 9B, and FIG. 9C are merely examples, and should not constitute any limitation on the charging method provided in this application.

In FIG. 9A, FIG. 9B, and FIG. 9C, the charging system that includes no power adjustment controller and that is shown in FIG. 6A, FIG. 6B, FIG. 6C, and FIG. 6D is used as an example. The charging gun 1 of the charging pile 2 receives a charging request of a vehicle.

When required power is less than remaining power of the power module group 1 of the charging pile 2, the charging controller 1 of the charging pile 2 controls S2 of the charging pile 2 to be turned on, and the power module group 1 of the charging pile 2 may charge the vehicle by using the charging gun 1 of the charging pile 2.

When required power is greater than remaining power of the power module group 1 of the charging pile 2, but the power module group 2 of the charging pile 2 is not used, it may also be understood that when the required power is less than total remaining power of the power module group 1 of the charging pile 2 and the power module group 2 of the charging pile 2, the charging controller 1 of the charging pile 2 controls S1 and S2 of the charging pile 2 to be turned on, and the power module group 1 of the charging pile 2 and the power module group 2 of the charging pile 2 may charge the vehicle by using the charging gun 1 of the charging pile 2.

When required power is greater than remaining power of the power module group 1 of the charging pile 2, and the power module group 2 of the charging pile 2 is in use, that is, when total remaining power of the charging pile 2 is less than the required power of the vehicle, the charging controller 1 of the charging pile 2 may communicate with controllers of the charging pile 1 and the charging pile 3 through communication buses, to obtain remaining power of the charging pile 1 and remaining power of the charging pile 3, and may determine whether the remaining power of the charging pile 1 or the charging pile 3 is greater than or equal to the shared power. If the remaining power of the charging pile 1 or the charging pile 3 is greater than or equal to the shared power, it may be determined which of the charging pile 1 and the charging pile 3 has higher remaining power, and the charging pile with the higher remaining power is determined as the target charging pile.

If the remaining power of the charging pile 1 is greater than the remaining power of the charging pile 3, the charging controller 1 of the charging pile 2 may determine the charging pile 1 as the target charging pile (for example, the power module 2 of the charging pile 1 has remaining power), and the charging controller 1 of the charging pile 2 may send a power sharing request to a charging controller of the charging pile 1. Alternatively, it may be understood that the charging controller 1 of the charging pile 2 may send a power request to a charging pile other than the charging pile 2 through a communication bus. In this case, the power sharing request may include an identifier or a number of the charging pile 2, the shared power, and an identifier or a number of the target charging pile, namely, the charging pile 1. After receiving the power sharing request, the charging controller of the charging pile 1 may determine, based on the identifier or the number of the target charging pile in the power sharing request, that the charging pile 1 is the target charging pile, and the charging controller 2 of the charging pile 1 may control S4 and S6 of the charging pile 1 to be turned on. In addition, the charging controller 1 of the charging pile 2 may turn on S2 and S3 of the charging pile 2, so that the power module group 1 of the charging pile 2 and the power module group 2 of the charging pile 1 can charge the vehicle by using the charging gun 1 of the charging pile 2.

If the remaining power of the charging pile 3 is greater than or equal to the remaining power of the charging pile 1, the charging controller 1 of the charging pile 2 may determine the charging pile 3 as the target charging pile (for example, the power module 2 of the charging pile 3 has remaining power), and the charging controller 1 of the charging pile 2 may send a power sharing request to a charging controller of the charging pile 3. Alternatively, it may be understood that the charging controller 1 of the charging pile 2 may send a power request to a charging pile other than the charging pile 2 through a communication bus. In this case, the power sharing request may include an identifier or a number of the charging pile 2, the shared power, and an identifier or a number of the target charging pile, namely, the charging pile 3. After receiving the power sharing request, the charging controller of the charging pile 3 may determine, based on the identifier or the number of the target charging pile in the power sharing request, that the charging pile 3 is the target charging pile, and the charging controller 2 of the charging pile 3 may control S4, S5, and S6 of the charging pile 3 to be turned on. In addition, the charging controller 1 of the charging pile 2 may turn on S2 and S3 of the charging pile 2, and the charging controller 2 of the charging pile 2 may turn on S5 of the charging pile 2, so that the power module group 1 of the charging pile 2 and the power module group 2 of the charging pile 3 can charge the vehicle by using the charging gun 1 of the charging pile 2.

If both the remaining power of the charging pile 1 and the remaining power of the charging pile 3 are less than the shared power, the charging pile 2 may further communicate with the charging pile 4, to obtain remaining power of the charging pile 4. If the remaining power of the charging pile 4 is greater than or equal to the remaining power, the charging controller 1 of the charging pile 2 determines the charging pile 4 as the target charging pile, and may send a power request to a charging pile other than the charging pile 2 through a communication bus. In this case, the power sharing request may include an identifier or a number of the charging pile 2, the shared power, and an identifier or a number of the target charging pile, namely, the charging pile 4. After a charging controller of the charging pile 4 receives the power sharing request, the charging controller 1 of the charging pile 4 may control S2 and S3 of the charging pile 4 to be turned on. After receiving the power sharing request, the charging pile 3 may determine that the charging pile 3 is located between the charging pile 2 and the charging pile 4. The charging controller 2 of the charging pile 3 may control S5 of the charging pile 3 to be turned on, the charging controller 1 of the charging pile 2 may control S2 and S5 of the charging pile 2 to be turned on, and the charging controller 2 of the charging pile 2 may control S5 of the charging pile 2 to be turned on, so that the power module group 1 of the charging pile 2 and the power module group 1 of the charging pile 4 can charge the vehicle by using the charging gun 1 of the charging pile 2.

If the remaining power of the charging pile 4 is less than the remaining power, the charging controller 1 of the charging pile 2 continues to sequentially communicate with remaining charging controllers, obtains their remaining power, determines whether the remaining power is greater than the shared power, determines a charging pile whose remaining power is greater than the shared power as the target charging pile, and sends the power sharing request, and the charging pile 2, the target charging pile, and a related controller of a charging pile between the charging pile 2 and the target charging pile can control a related switch, so that the power module group 1 of the charging pile 2 and the power module group of the target charging pile can charge the vehicle by using the charging gun 1 of the charging pile 2.

If there is no charging pile whose remaining power is greater than the shared power in the foregoing determining, the charging controller 1 of the charging pile 2 may control S2 of the charging pile 2 to be turned on, so that the power module group 1 of the charging pile 2 may first independently charge the vehicle by using the charging gun 1 of the charging pile 2, and then continue to perform the foregoing determining logic until the vehicle is fully charged or charging ends (for example, the charging gun is disconnected from the vehicle).

It should be understood that, in the foregoing power sharing process, when the required power of the vehicle is less than the remaining power of the charging controller 1 of the charging pile 2 in a time period, a related controller may control a related switch to be turned off. For example, in a process of cross-pile sharing between the charging pile 2 and the charging pile 4, the charging controller 2 of the charging pile 2 may control S5 of the charging pile 2 to be turned off, and/or, the charging controller 2 of the charging pile 3 may control S5 of the charging pile 3 to be turned off, and/or, the charging controller 1 of the charging pile 4 may control S2 and S3 of the charging pile 4 to be turned off, so that the power module group 1 of the charging pile 2 can independently charge the vehicle by using the charging gun 1 of the charging pile 2. This is not limited in this embodiment of this application.

This application further provides a chip system. The chip system includes at least one processor, configured to implement functions in the charging method performed by the first charging controller or the power adjustment controller in any one of embodiments in FIG. 7 to FIG. 9A, FIG. 9B, and FIG. 9C, for example, receive or process data and/or information in the foregoing method.

In a possible design, the chip system further includes a memory. The memory is configured to store program instructions and data. The memory is located inside the processor or outside the processor.

The chip system may include a chip, or may include a chip and another discrete component.

This application further provides a computer program product. The computer program product includes a computer program (or may be referred to as code or instructions). When the computer program runs, a computer is enabled to perform the method performed by the first charging controller or the power adjustment controller in any one of the embodiments shown in FIG. 7 to FIG. 9A, FIG. 9B, and FIG. 9C.

This application further provides a computer-readable storage medium. The computer-readable storage medium stores a computer program (or may be referred to as code or instructions). When the computer program runs, a computer is enabled to perform the method performed by the first charging controller or the power adjustment controller in any one of the embodiments shown in FIG. 7 to FIG. 9A, FIG. 9B, and FIG. 9C.

It should be understood that the processor in this embodiment of this application may be an integrated circuit chip, and has a signal processing capability. In an implementation process, the steps in the foregoing method embodiments may be completed by using a hardware integrated logic circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly performed and completed by using a hardware decoding processor, or may be performed and completed by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory. The processor reads information in the memory and completes the steps in the foregoing methods in combination with hardware of the processor.

It may be further understood that the memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the system and the method described in this specification is intended to include but is not limited to these memories and any memory of another proper type.

The terms such as "unit", and "module" used in this specification may be used to indicate computer-related entities, hardware, firmware, combinations of hardware and software, software, or software being executed.

A person of ordinary skill in the art may be aware that illustrative logical blocks (illustrative logical blocks) and steps (steps) described with reference to embodiments disclosed in this specification can be implemented by electronic hardware or a combination of computer software and electronic hardware. Whether the functions are performed by using hardware or software depends on particular applications and design constraints of technical solutions. A person skilled in the art may use different methods to implement the described functions for each particular application, but it should not be considered that the implementation goes beyond the scope of this application. In the several embodiments provided in this application, it should be understood that the disclosed apparatus, device, and method may be implemented in other manners. For example, the described apparatus embodiment is merely an example. During actual implementation, there may be another division manner. For example, a plurality of units or components may be combined or integrated into another system, or some features may be ignored or not performed. In addition, the displayed or discussed mutual coupling or direct coupling or communication connection may be implemented through direct coupling or communication connection between some interfaces, apparatuses or units, or may be implemented in electrical, mechanical, or other forms.

The units described as separate parts may or may not be physically separate, and parts displayed as units may or may not be physical units, and may be located in one location, or may be distributed on a plurality of network units. Some or all of the units may be selected based on actual requirements to achieve the objectives of the solutions in embodiments.

In addition, functional units in embodiments of this application may be integrated into one processing unit, each of the units may exist alone physically, or two or more units may be integrated into one unit.

In the foregoing embodiments, all or a part of functions of functional units may be implemented by using software, hardware, firmware, or any combination thereof. When the software is used for implementation, all or some of embodiments may be implemented in a form of a computer program product. The computer program product includes one or more computer instructions (programs). When the computer program instructions (programs) are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

When the functions are implemented in a form of a software functional unit and sold or used as an independent product, the functions may be stored in a computer-readable storage medium. Based on such an understanding, the technical solutions in this application essentially, the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes: any medium that can store program code, such as a USB flash drive, a removable hard disk, a ROM, a RAM, a magnetic disk, or an optical disc.

The foregoing descriptions are merely specific implementations of this application, but the protection scope of this application is not limited thereto. Therefore, the protection scope of this application shall be subject to the protection scope of the claims.

## Claims

1. A charging pile, comprising:
N charging branches (1, 2), wherein each of the N charging branches comprises a charging gun, a power module configured to supply power for the charging gun, and an intra-branch switch (S2, S6) connected between the charging gun and the power module;
K charging controllers, wherein each of the K charging controllers is connected to at least one intra-branch switch, each charging controller is configured to control turn-on and turn-off of the connected intra-branch switch, N ≥ K ≥ 1, and N and K are integers;
M interfaces, configured to connect to one or more charging piles other than the charging pile, wherein N ≥ M ≥ 2, and M is an integer; and
an interface switch (S5), configured to connect to every two of the M interfaces,
wherein
each of the N charging branches is connected to one of the M interfaces by using an external switch (S3, S4) included in the charging pile,
a charging gun in a charging branch in the charging pile is configured to receive a charging request, and the charging request comprises required power for charging;
said charging gun in said charging branch in the charging pile is further configured to forward the charging request to a charging controller connected to said charging gun;
said charging controller is configured to determine, based on the received charging request, whether remaining power of the charging pile reaches the required power;
said charging controller is further configured to: when the remaining power of the charging pile is less than the required power, determine, based on the remaining power of the charging pile and the required power, shared power required by the charging pile, wherein the shared power is power that needs to be shared by one or more charging piles other than the charging pile with the charging pile; and
said charging controller is further configured to: determine a target charging pile from the one or more charging piles based on the shared power, and the target charging pile is a charging pile whose remaining power is greater than or equal to the shared power in the one or more charging piles,
wherein the target charging pile is one charging pile that is closest to the charging pile and that is one of one or more charging piles whose remaining power is greater than or equal to the shared power.

2. The charging pile according to claim 1, wherein N ≥ 2, every two of the N charging branches are connected to each other by using an inter-branch switch (S1), and the inter-branch switch is controlled by one of the K charging controllers.

3. The charging pile according to any one of claims 1 to 2, wherein N = M = 2.

4. A charging system, comprising a plurality of charging piles according to any one of claims 1 to 3, wherein each charging pile is connected to one or more charging piles in the charging system through an interface (251, 252).

5. The charging system according to claim 4, wherein the first charging controller (211, 212) is further configured to send a power sharing request to a second charging controller, the power sharing request comprises the shared power, the power sharing request is used to request to obtain the shared power from the target charging pile, and the second charging controller is a charging controller of the target charging pile.

6. The charging system according to claim 4, wherein the charging system further comprises a power adjustment controller (01), and the power adjustment controller is connected to each charging controller of each charging pile in the charging system;
the first charging controller is further configured to send a power sharing request to the power adjustment controller (01), wherein the power sharing request comprises the shared power, and the power sharing request is used to request the power adjustment controller to determine, from the one or more charging piles other than the first charging pile, a target charging pile whose remaining power is greater than or equal to the shared power;
the power adjustment controller (01) is configured to determine the target charging pile from the one or more charging piles based on the power sharing request; and
the power adjustment controller (01) is further configured to send the power sharing request to a second charging controller, wherein the second charging controller is a charging controller of the target charging pile.

7. The charging system according to claim 5 or 6, wherein the second charging controller is a charging controller in a charging branch with a largest number or a charging controller in a charging branch with a smallest number in a plurality of charging branches that can provide the shared power in the target charging pile.

8. A charging method, applied to a charging system, wherein the charging system comprises a plurality of charging piles according to any one of claims 1 to 3, each charging pile is connected to one or more charging piles in the charging system through an interface, and a first charging pile in the charging system is a charging pile that needs to share power with one or more charging piles other than the first charging pile in the charging system; and
wherein the charging method comprises:
determining (710), based on shared power required by the first charging pile, a target charging pile from the one or more charging piles other than the first charging pile in the charging system, wherein the target charging pile is a charging pile whose remaining power is greater than or equal to the shared power in the one or more charging piles, the shared power is determined based on remaining power of the first charging pile and required power, and the required power is comprised in a charging request received by a first charging gun in the first charging pile; and
sending (720) a power sharing request to a second charging controller, wherein the power sharing request comprises the shared power, the power sharing request is used to request to obtain the shared power from the target charging pile, and the second charging controller is a charging controller of the target charging pile,
wherein the determining (710), based on shared power required by the first charging pile, a target charging pile from the one or more charging piles other than the first charging pile in the charging system comprises:
sequentially querying remaining power of each of the one or more charging piles other than the first charging pile in the charging system; and
determining the target charging pile based on the shared power and a distance between each of the one or more charging piles and the first charging pile, wherein the target charging pile is one charging pile that is closest to the first charging pile and that is one of one or more charging piles whose remaining power is greater than or equal to the shared power.

9. The method according to claim 8, wherein the determining (710), based on shared power required by the first charging pile, a target charging pile from the one or more charging piles other than the first charging pile in the charging system comprises:
determining, based on the shared power, the target charging pile from the one or more charging piles in ascending order of distances from the first charging pile, wherein the target charging pile is one charging pile that is closest to the first charging pile and that is one of one or more charging piles whose remaining power is greater than or equal to the shared power.

10. A computer-readable storage medium, wherein the computer-readable storage medium stores a computer program, and when the computer program runs on a computer associated with a charging system, the charging system is caused to perform the method according to claim 8 or 9.

11. A computer program product, comprising program code, wherein when the program code is run on a computer associated with a charging system, the charging system is caused to implement the method according to claim 8 or 9.

## Patentansprüche

1. Ladesäule, umfassend:
N Ladezweige (1, 2), wobei jeder der N Ladezweige eine Ladepistole, ein Leistungsmodul, das zum Zuführen von Leistung für die Ladepistole ausgelegt ist, und einen zweiginternen Schalter (S2, S6) umfasst, der zwischen die Ladepistole und das Leistungsmodul geschaltet ist;
K Ladesteuerungen, wobei jede der K Ladesteuerungen mit mindestens einem zweiginternen Schalter verbunden ist, jede Ladesteuerung zum Ein- und Ausschalten des verbundenen zweiginternen Schalters ausgelegt ist, wobei N ≥ K ≥ 1 und N und K ganze Zahlen sind;
M Schnittstellen, die zur Verbindung mit einer oder mehreren Ladesäulen außer der Ladesäule ausgelegt sind, wobei N ≥ M ≥ 2 und M eine ganze Zahl ist; und
einen Schnittstellenschalter (S5), der zur Verbindung mit jeweils zweien der M Schnittstellen ausgelegt ist, wobei
jeder der N Ladezweige unter Verwendung eines externen Schalters (S3, S4), der in der Ladesäule beinhaltet ist, mit einer der M Schnittstellen verbunden ist,
eine Ladepistole in einem Ladezweig in der Ladesäule zum Empfangen einer Ladeanforderung ausgelegt ist und die Ladeanforderung eine angeforderte Leistung zum Laden umfasst;
die Ladepistole in dem Ladezweig in der Ladesäule ferner zum Weiterleiten der Ladeanforderung an eine Ladesteuerung ausgelegt ist, die mit der Ladepistole verbunden ist;
die Ladesteuerung dazu ausgelegt ist, basierend auf der empfangenen Ladeanforderung zu bestimmen, ob eine verbleibende Leistung der Ladesäule die angeforderte Leistung erreicht;
die Ladesteuerung ferner ausgelegt ist zum: Bestimmen, wenn die verbleibende Leistung der Ladesäule geringer als die angeforderte Leistung ist, einer geteilten Leistung, die durch die Ladesäule angefordert wird, basierend auf der verbleibenden Leistung der Ladesäule und der angeforderten Leistung, wobei die geteilte Leistung eine Leistung ist, die von einer oder mehreren Ladesäulen außer der Ladesäule mit der Ladesäule geteilt werden muss; und
die Ladesteuerung ferner konfiguriert ist zum: Bestimmen einer Zielladesäule aus der einen oder den mehreren Ladesäulen basierend auf der geteilten Leistung und wobei die Zielladesäule eine Ladesäule ist, deren verbleibende Leistung größer oder gleich der geteilten Leistung in der einen oder den mehreren Ladesäulen ist;
wobei die Zielladesäule eine Ladesäule ist, die der Ladesäule am nächsten ist und die eine von einer oder mehreren Ladesäulen ist, deren verbleibende Leistung größer oder gleich der geteilten Leistung ist.

2. Ladesäule nach Anspruch 1, wobei N ≥ 2, wobei jeweils zwei der N Ladezweige durch Verwenden eines Zwischenzweigschalters (S1) miteinander verbunden sind und der Zwischenzweigschalter durch eine der K Ladesteuerungen gesteuert wird.

3. Ladesäule nach einem der Ansprüche 1 bis 2, wobei N = M = 2.

4. Ladesystem, umfassend eine Mehrzahl von Ladesäulen nach einem der Ansprüche 1 bis 3, wobei jede Ladesäule über eine Schnittstelle (251, 252) mit einer oder mehreren Ladesäulen in dem Ladesystem verbunden ist.

5. Ladesystem nach Anspruch 4, wobei die erste Ladesteuerung (211, 212) ferner zum Senden einer Leistungsteilungsanforderung an eine zweite Ladesteuerung ausgelegt ist, wobei die Leistungsteilungsanforderung die geteilte Leistung umfasst, die Leistungsteilungsanforderung zum Anfordern verwendet wird, die geteilte Leistung von der Zielladesäule zu erhalten, und die zweite Ladesteuerung eine Ladesteuerung der Zielladesäule ist.

6. Ladesystem nach Anspruch 4, wobei das Ladesystem ferner eine Leistungsanpassungssteuerung (01) umfasst und die Leistungsanpassungssteuerung mit jeder Ladesteuerung jeder Ladesäule in dem Ladesystem verbunden ist;
die erste Ladesteuerung ferner zum Senden einer Leistungsteilungsanforderung an die Leistungsanpassungssteuerung (01) ausgelegt ist, wobei die Leistungsteilungsanforderung die geteilte Leistung umfasst und die Leistungsteilungsanforderung verwendet wird, um die Leistungsanpassungssteuerung aufzufordern, aus der einen oder den mehreren Ladesäulen außer der ersten Ladesäule eine Zielladesäule zu bestimmen, deren verbleibende Leistung größer oder gleich der geteilten Leistung ist;
die Leistungsanpassungssteuerung (01) dazu ausgelegt ist, die Zielladesäule aus der einen oder den mehreren Ladesäulen basierend auf der Leistungsteilungsanforderung zu bestimmen; und
die Leistungsanpassungssteuerung (01) ferner dazu ausgelegt ist, die Leistungsteilungsanforderung an eine zweite Ladesteuerung zu senden, wobei die zweite Ladsteuerung eine Ladesteuerung der Zielladesäule ist.

7. Ladesystem nach Anspruch 5 oder 6, wobei die zweite Ladesteuerung eine Ladesteuerung in einem Ladezweig mit einer größten Anzahl oder eine Ladesteuerung in einem Ladezweig mit einer kleinsten Anzahl in einer Mehrzahl von Ladezweigen ist, die die geteilte Leistung in der Zielladesäule bereitstellen kann.

8. Ladeverfahren, das auf ein Ladesystem angewendet wird, wobei das Ladesystem eine Mehrzahl von Ladesäulen nach einem der Ansprüche 1 bis 3 umfasst, jede Ladesäule über eine Schnittstelle mit einer oder mehreren Ladesäulen in dem Ladesystem verbunden ist und eine erste Ladesäule in dem Ladesystem eine Ladesäule ist, die eine mit einer oder mehreren Ladesäulen außer der ersten Ladesäule in dem Ladesystem geteilte Leistung benötigt; und
wobei das Ladeverfahren Folgendes umfasst:
Bestimmen (710) einer Zielladesäule aus der einen oder den mehreren Ladesäulen außer der ersten Ladesäule in dem Ladesystem basierend auf der geteilten Leistung, die durch die erste Ladesäule angefordert wird, wobei die Zielladesäule eine Ladesäule ist, deren verbleibende Leistung größer oder gleich der geteilten Leistung in der einen oder den mehreren Ladesäulen ist, wobei die geteilte Leistung basierend auf der verbleibenden Leistung der ersten Ladesäule und der angeforderten Leistung bestimmt wird und die angeforderte Leistung in einer Ladeanforderung umfasst ist, die durch eine erste Ladepistole in der ersten Ladesäule empfangen wird; und
Senden (720) einer Leistungsteilungsanforderung an eine zweite Ladesteuerung, wobei die Leistungsteilungsanforderung die geteilte Leistung umfasst, die Leistungsteilungsanforderung zum Anfordern verwendet wird, die geteilte Leistung von der Zielladesäule zu erhalten, und die zweite Ladesteuerung eine Ladesteuerung der Zielladesäule ist,
wobei das Bestimmen (710) einer Zielladesäule aus der einen oder den mehreren Ladesäulen außer der ersten Ladesäule in dem Ladesystem basierend auf der durch die erste Ladesäule angeforderten geteilten Leistung Folgendes umfasst:
sequenzielles Abfragen der verbleibenden Leistung von jeder der einen oder den mehreren Ladesäulen außer der ersten Ladesäule in dem Ladesystem; und
Bestimmen der Zielladesäule basierend auf der geteilten Leistung und einem Abstand zwischen jeder der einen oder der mehreren Ladesäulen und der ersten Ladesäule, wobei die Zielladesäule eine Ladesäule ist, die der ersten Ladesäule am nächsten ist und die eine von einer oder mehreren Ladesäulen ist, deren Ladeleistung größer als oder gleich der geteilten Leistung ist.

9. Verfahren nach Anspruch 8, wobei das Bestimmen (710) einer Zielladesäule aus der einen oder den mehreren Ladesäulen außer der ersten Ladesäule in dem Ladesystem basierend auf der durch die erste Ladesäule angeforderten geteilten Leistung Folgendes umfasst:
Bestimmen der Zielladesäule aus der einen oder den mehreren Ladesäulen basierend auf der geteilten Leistung in aufsteigender Reihenfolge der Abstände von der ersten Ladesäule, wobei die Zielladesäule eine Ladesäule ist, die der ersten Ladesäule am nächsten ist und die eine von einer oder mehreren Ladesäulen ist, deren Ladeleistung größer als oder gleich der geteilten Leistung ist.

10. Computerlesbares Speichermedium, wobei das computerlesbare Speichermedium ein Computerprogramm speichert und, wenn das Computerprogramm auf einem Computer ausgeführt wird, der mit einem Ladesystem assoziiert ist, das Ladesystem zum Durchführen des Verfahrens nach Anspruch 8 oder 9 veranlasst wird.

11. Computerprogrammprodukt, umfassend Programmcode, wobei, wenn der Programmcode auf einem Computer ausgeführt wird, der mit einem Ladesystem assoziiert ist, das Ladesystem zum Implementieren des Verfahrens nach Anspruch 8 oder 9 veranlasst wird.

## Revendications

1. Station de charge, comprenant :
N branches de charge (1, 2), chacune des N branches de charge comprenant un pistolet de charge, un module d'alimentation configuré pour fournir une puissance au pistolet de charge, et un commutateur intra-branche (S2, S6) connecté entre le pistolet de charge et le module d'alimentation ;
K contrôleurs de charge, chacun des K contrôleurs de charge étant connecté à au moins un commutateur intra-branche, chaque contrôleur de charge étant configuré pour commander la fermeture et l'ouverture du commutateur intra-branche connecté, N ≥ K ≥ 1, et N et K étant des entiers ;
M interfaces, configurées pour se connecter à une ou plusieurs stations de charge autres que la station de charge, où N ≥ M ≥ 2, et M est un entier ; et
un commutateur d'interface (S5), configuré pour se connecter à chaque paire d'interfaces des M interfaces,
dans laquelle
chacune des N branches de charge est connectée à une des M interfaces au moyen d'un commutateur externe (S3, S4) contenu dans la station de charge,
un pistolet de charge dans une branche de charge de la station de charge est configuré pour recevoir une demande de charge, et la demande de charge comprend la puissance requise pour la charge ;
ledit pistolet de charge dans ladite branche de charge de la station de charge est également configuré pour envoyer la demande de charge à un contrôleur de charge connecté audit pistolet de charge ;
ledit contrôleur de charge est configuré pour déterminer, sur la base de la demande de charge reçue, si la puissance restante de la station de charge atteint la puissance requise ;
ledit contrôleur de charge est également configuré pour : lorsque la puissance restante de la station de charge est inférieure à la puissance requise, déterminer, sur la base de la puissance restante de la station de charge et de la puissance requise, la puissance partagée requise par la station de charge, la puissance partagée étant la puissance qui doit être partagée, par une ou plusieurs stations de charge autres que la station de charge, avec la station de charge ; et
ledit contrôleur de charge est également configuré pour : déterminer une station de charge cible parmi les une ou plusieurs stations de charge sur la base de la puissance partagée, et la station de charge cible est une station de charge dont la puissance restante est supérieure ou égale à la puissance partagée dans les une ou plusieurs stations de charge,
dans lequel la station de charge cible est une station de charge qui est la plus proche de la station de charge et qui est l'une d'une ou plusieurs stations de charge dont la puissance restante est supérieure ou égale à la puissance partagée.

2. Station de charge selon la revendication 1, dans laquelle N ≥ 2, les branches de chaque paire de branches des N branches de charge étant connectées l'une à l'autre au moyen d'un commutateur inter-branche (S1), et le commutateur inter-branche étant commandé par un des K contrôleurs de charge.

3. Station de charge selon l'une quelconque des revendications 1 et 2, dans laquelle N = M = 2.

4. Système de charge, comprenant une pluralité de stations de charge selon l'une quelconque des revendications 1 à 3, dans lequel chaque station de charge est connecté à une ou plusieurs stations de charge du système de charge par une interface (251, 252).

5. Système de charge selon la revendication 4, dans lequel le premier contrôleur de charge (211, 212) est également configuré pour envoyer une demande de partage de puissance à un deuxième contrôleur de charge, la demande de partage de puissance comprend la puissance partagée, la demande de partage de puissance est utilisée pour demander l'obtention de la puissance partagée en provenance de la station de charge cible, et le deuxième contrôleur de charge est un contrôleur de charge de la station de charge cible.

6. Système de charge selon la revendication 4, le système de charge comprenant également un contrôleur de réglage de puissance (01), et le contrôleur de réglage de puissance étant connecté à chaque contrôleur de charge de chaque station de charge du système de charge ;
le premier contrôleur de charge étant également configuré pour envoyer une demande de partage de puissance au contrôleur de réglage de puissance (01), la demande de partage de puissance comprenant la puissance partagée, et la demande de partage de puissance étant utilisée pour demander au contrôleur de réglage de puissance de déterminer, parmi les une ou plusieurs stations de charge autres que la première station de charge, une station de charge cible dont la puissance restante est supérieure ou égale à la puissance partagée ;
le contrôleur de réglage de puissance (01) étant configuré pour déterminer la station de charge cible parmi les une ou plusieurs stations de charge sur la base de la demande de partage de puissance ; et
le contrôleur de réglage de puissance (01) étant également configuré pour envoyer la demande de partage de puissance à un deuxième contrôleur de charge, le deuxième contrôleur de charge étant un contrôleur de charge de la station de charge cible.

7. Système de charge selon la revendication 5 ou 6, dans lequel le deuxième contrôleur de charge est un contrôleur de charge dans une branche de charge ayant un plus grand numéro ou un contrôleur de charge dans une branche de charge ayant un plus petit numéro dans une pluralité de branches de charge capables de fournir la puissance partagée dans la station de charge cible.

8. Procédé de charge, appliqué à un système de charge, dans lequel le système de charge comprend une pluralité de stations de charge selon l'une quelconque des revendications 1 à 3, chaque station de charge est connectée à une ou plusieurs stations de charge du système de charge par une interface, et une première station de charge du système de charge est une station de charge qui doit partager de la puissance avec une ou plusieurs stations de charge autres que la première station de charge du système de charge ; et
le procédé de charge comprenant :
la détermination (710), sur la base de la puissance partagée requise par la première station de charge, d'une station de charge cible parmi les une ou plusieurs stations de charge autres que la première station de charge du système de charge, la station de charge cible étant une station de charge dont la puissance restante est supérieure ou égale à la puissance partagée dans les une ou plusieurs stations de charge, la puissance partagée étant déterminée sur la base de la puissance restante de la première station de charge et de la puissance requise, et la puissance requise étant comprise dans une demande de charge reçue par un premier pistolet de charge de la première station de charge ; et
l'envoi (720) d'une demande de partage de puissance à un deuxième contrôleur de charge, la demande de partage de puissance comprenant la puissance partagée, la demande de partage de puissance étant utilisée pour demander l'obtention de la puissance partagée en provenance de la station de charge cible, et le deuxième contrôleur de charge étant un contrôleur de charge de la station de charge cible,
dans lequel la détermination (710), sur la base de la puissance partagée requise par la première station de charge, d'une station de charge cible parmi les une ou plusieurs stations de charge autres que la première station de charge du système de charge comprend :
la vérification séquentielle de la puissance restante de chacune des une ou plusieurs stations de charge autres que la première station de charge du système de charge ; et la détermination de la station de charge cible sur la base de la puissance partagée et d'une distance entre chacune des une ou plusieurs stations de charge et la première station de charge, la station de charge cible étant une station de charge qui est la plus proche de la première station de charge et qui est l'une d'une ou plusieurs stations de charge dont la puissance restante est supérieure ou égale à la puissance partagée.

9. Procédé selon la revendication 8, dans lequel la détermination (710), sur la base de la puissance partagée requise par la première station de charge, d'une station de charge cible parmi les une ou plusieurs stations de charge autres que la première station de charge du système de charge comprend :
la détermination, sur la base de la puissance partagée, de la station de charge cible parmi les une ou plusieurs stations de charge par ordre croissant des distances à la première station de charge, la station de charge cible étant une station de charge qui est la plus proche de la première station de charge et qui est l'une d'une ou plusieurs stations de charge dont la puissance restante est supérieure ou égale à la puissance partagée.

10. Support de stockage lisible par ordinateur, le support de stockage lisible par ordinateur stockant un programme informatique, et lorsque le programme informatique s'exécute sur un ordinateur associé à système de charge, le système de charge étant amené à réaliser le procédé selon la revendication 8 ou 9.

11. Produit-programme informatique, comprenant un code de programme, dans lequel, lorsque le code de programme s'exécute sur un ordinateur associé à un système de charge, le système de charge est amené à mettre en œuvre le procédé selon la revendication 8 ou 9.
